# EUROPÄISCHE PATENTSCHRIFT

(11) **EP 2 708 388 B1**
(45) Veröffentlichungstag und Bekanntmachung des Hinweises auf die Patenterteilung: **18.07.2018**
(21) Anmeldenummer: 13005632.8
(22) Anmeldetag: 22.11.2011
(51) Int. Cl.: B60G 17/015, B60G 17/052, F01L 1/34

(54) **Druckluftversorgungsanlage und pneumatisches System**
AIR SPRING, AIR SUPPLY SYSTEM AND PNEUMATIC SYSTEM
SUSPENSION D'AIR, SYSTÈME D'ALIMENTATION D'AIR ET SYSTÈME PNEUMATIQUE

(30) Priorität: 16.12.2010 DE 102010054699
(43) Veröffentlichungstag der Anmeldung: 19.03.2014
(62) Teilanmeldung aus: 11787799.3
(73) Patentinhaber: WABCO GmbH, 30453 Hannover (DE)
(72) Erfinder: Dieter, Frank, 30171 Hannover (DE); Meier, Jörg, 31840 Hessisch Oldendorf (DE); Meißner, Frank, 30453 Hannover (DE)

(56) Entgegenhaltungen:
- DE-A1- 2 016 030
- DE-A1- 19 731 402
- DE-A1-102004 035 763
- DE-A1-102006 041 010
- DE-B4- 10 223 405
- US-A- 5 711 150

## Beschreibung

Die Erfindung betrifft eine Druckluftversorgungsanlage gemäß dem Oberbegriff des Anspruchs 1. Weiter betrifft die Erfindung ein pneumatisches System gemäß dem Oberbegriff des Anspruchs 13 mit einer solchen Druckluftversorgungsanlage. Weiter betrifft die Erfindung ein Verfahren zum Betreiben der Druckluftversorgungsanlage gemäß dem Oberbegriff des Anspruchs 13. Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.
Um einen langfristigen Betrieb der Druckluftversorgungsanlage sicherzustellen weist eine Pneumatikhauptleitung einen Lufttrockner auf, mit dem die Druckluft zu trocknen ist. Dadurch wird die Ansammlung von Feuchtigkeit im Pneumatiksystem vermieden.

Feuchtigkeit kann bei vergleichsweise niedrigen Temperaturen zu ventilschädigender Kristallbildung führen und ansonsten zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus mit der getrockneten Druckluft aus der Pneumatikanlage, insbesondere einer Luftfederanlage, im Gegenstrom oder Gleichstrom relativ zur Befüllrichtung durchströmt wird. Eine Regeneration des Lufttrockners wird im Wesentlichen durch einen Druckwechsel am Lufttrockner ermöglicht, wobei ein im Vergleich zur Adsorption bei der Regeneration vorliegender Druck regelmäßig geringer ist, um eine Feuchtigkeitsabgabe aus dem Granulat zu ermöglichen. Dazu kann die Entlüftungsventilanordnung geöffnet werden, wobei die Regenerationsfähigkeit des Lufttrockners regelmäßig von den Druckverhältnissen und dem Druckwechsel in der Druckluftversorgungsanlage abhängig ist. Auch für eine solche sogenannte Druckwechseladsorption hat es sich als wünschenswert erwiesen, eine Druckluftversorgungsanlage flexibel und gleichzeitig verlässlich auszulegen. Insbesondere soll einerseits eine vergleichsweise schnelle Entlüftung ermöglicht werden und dennoch ein für eine Regeneration des Lufttrockners ausreichend niedriger Luftdruck zur Verfügung stehen.

Aus DE 35 42 974 A1 der Anmelderin ist eine mit Luftfiltern versehene Niveauregeleinrichtung für Fahrzeuge bekannt, mit der in Abhängigkeit von der Fahrzeugbelastung ein vorgegebener Abstand der Fahrzeugzelle von der Fahrzeugachse durch Auffüllen oder Entleeren der Luftfedern eingestellt werden kann. Die Einrichtung hat ein mit dem Druck in den Luftfedern steuerbares Sicherheitsventil. Eine Regeneration des Lufttrockners ist bei einer solchen Anlage über eine Drossel und ein gegen eine Befüllrichtung zu öffnendes Rückschlagventil möglich.

DE 199 11 933 B4 offenbart eine Druckluftversorgungsanlage mit einem Lufttrockner mit einer ersten Druckluftversorgungsleitung, wobei die Druckluft durch ein Trockenmittel des Lufttrockners geleitet wird und mit einer zweiten Druckluftversorgungsleitung, deren Beströmung möglich ist, ohne dass die Druckluft durch das Trockenmittel geleitet wird.

Aus dem Stand der Technik sind verschiedenste Ansätze bekannt, eine erste pneumatische Verbindung zwischen einer eingangs genannten Druckluftzuführung und einer eingangs genannten Pneumatikanlage auszulegen. Diese berücksichtigen die Grundfunktionen einer Druckluftversorgungsanlage beim Belüften der Pneumatikanlage und Entlüften der Pneumatikanlage. Hinsichtlich des oben genannten Bedarfs einer vergleichsweise schnellen Entlüftung mit dennoch für eine Regeneration des Lufttrockners ausreichend niedrigem Luftdruck sind diese jedoch noch verbesserungswürdig.

DE 102 23 405 B4 offenbart ein Luftfedersystem eines Kraftfahrzeugs mit einer Druckluftversorgungsanlage aufweisend eine Druckleitung zur Verbindung eines Kompressors mit den Luftfedern und eine Entlüftungsleitung, über welche die Druckleitung mittels eines Schaltventils absperrbar mit der Atmosphäre verbindbar ist. Zwischen einem Trockner und Niveauregelventilen einer Galerie der Luftfederanlage ist ein als pneumatische Parallelschaltung ausgebildeter Abschnitt der Druckleitung vorgesehen, in dem eine Drossel parallel zu einem Rückschlagventil und parallel zu einem weiteren Schaltventil angeordnet ist. Das Schaltventil in der Entlüftungsleitung und das Schaltventil im Abschnitt der Druckleitung sind über elektrische Steuerleitungen mit derselben Endstufe eines Steuergeräts verbunden.

DE 101 21 582 C2 offenbart ein Luftversorgungsaggregat für eine Luftfederungsanlage, bei welcher ein Entlüftungsventil in einer Entlüftungsleitung, ein Luftfederventil in der Galerie der Luftfederungsanlage und ein Luftsteuerventil vorgesehen ist. Alle drei Ventile sind mit einer elektronischen Steuereinheit verbunden. In einem als pneumatische Parallelschaltung ausgebildeten Abschnitt einer Druckleitung zwischen Trockner und Federventil ist das Luftsteuerventil parallel zu einem Rückschlagventil geschaltet, so dass Luft zwar ungehindert in die Luftfederanlage aufgenommen werden kann, jedoch nur gesteuert über das Luftsteuerventil wieder abgelassen werden kann. Zum Ablassen von Druckluft aus der Luftfederungsanlage werden alle drei vorgenannten Ventile geöffnet.

US 6,098,967 offenbart eine Druckluftversorgungsanlage der eingangs genannten Art, bei der in der Pneumatikhauptleitung zwischen Lufttrockner und Luftfederanlage ein als pneumatische Parallelschaltung ausgebildeter Abschnitt mit zwei parallel geschalteten Zweigleitungen angeordnet ist, wobei in einer ersten Zweigleitung ein zur Beströmung durchströmbares Rückschlagventil und in einer zweiten Zweigleitung ein zur Entlüftung durchströmbares Rückschlagventil mit einer Drossel und einem Schaltventil in Reihe geschaltet ist.

EP 1 216 860 B1 offenbart eine Niveauregelanlage für ein Kraftfahrzeug mit Luftfedern und mit einem Steuergerät, das die Funktionen Befüllen und Leeren in Abhängigkeit von dem Niveau des Fahrzeugaufbaus steuert oder regelt. Unter anderem sind ein steuerbares Wegeventil einer Druckluftversorgungsanlage und ein steuerbares einem Speicher vorgeordnetes Wegeventil mit dem Steuergerät verbunden. Das steuerbare und im geöffneten Zustand nur feststehend gedrosselte Wegeventil der Druckluftversorgungsanlage ist in einer Parallelschaltung zu einem Rückschlagventil angeordnet.

Problematisch bei allen vorgenannten Druckluftversorgungsanlagen ist die noch verbesserungswürdige und vergleichsweise komplexe bzw. bauteilintensive Anbindung einer Luftfederanlage an die Druckluftversorgungsanlage. Aufgrund des regelmäßig als Parallelschaltung ausgebildeten vorgenannten Abschnitts in einer Pneumatikhauptleitung ist diese wenigstens in einer Bypass-Leitung offen, bzw. gegen Gegendruck z.B. eines Rückschlagventils zu öffnen.

EP 1 243 447 A2 offenbart in Fig. 9 eine geschlossene Niveauregelanlage mit einer Galerieleitung, an die eine Anzahl von jeweils als Druckkammer für eine Luftfeder dienende Bälge und eine steuerbare, aus einer Reihenanordnung eines ersten 2/2-Wegeventils und eines zweiten 2/2-Wegeventils gebildete Trennventilanordnung einer Pneumatikanlage angeschlossen ist. Das zweite Wegeventil ist in der Druckluftleitung zwischen dem ersten steuerbaren Wegeventil und den Luftfedern angeordnet. Die Galerieleitung ist am zweiten Wegeventil angeschlossen. Die Pneumatikanlage ist aus der am ersten Wegeventil angeschlossenen Druckluftversorgungsanlage über die Trennventilanordnung einerseits eines Trockners befüllbar und entlüftbar. Ein Druckluftspeicher ist über ein separates Wegeventil und eine separate Pneumatikleitung anderseits des Trockners an die Druckluftversorgungsanlage angeschlossen.

EP 1 380 453 B1 offenbart eine ähnlich geschlossene Niveauregelanlage für Fahrzeuge, durch die ein Fahrzeugaufbau gegenüber mindestens einer Fahrzeugachse abgefedert ist. Die Pneumatikanlage ist aus der an einem einzigen 2/2-Wegeventil angeschlossenen Druckluftversorgungsanlage einerseits eines Trockners befüllbar und entlüftbar. Bei dieser ist ebenfalls ein Druckluftspeicher über ein separates Wegeventil und eine separate Pneumatikleitung anderseits des Trockners an die Druckluftversorgungsanlage angeschlossen. Der Druckluftspeicher ist separat von einer Luftfederanlage durch ein 4/4-Wegeventil oder zwei 2/2-Wegeventile von der Druckluftversorgungsanlage getrennt.
Auch diese pneumatischen Systeme mit einer vergleichsweise aufwändigen Anbindung der Pneumatikanlage an die notwendiger Weise geschlossene Druckluftversorgungsanlage sind noch verbesserbar. Die US 5 711 150 A beschreibt eine Luftfederanlage für ein Fahrzeug mit einem zentralen Sperrventil für zwei Luftfedern einer Fahrzeugachse und einem elektrisch ansteuerbaren Entlüftungsventil. Das Sperrventil und das Entlüftungsventil sind in einem gemeinsamen Gehäuse untergebracht und weisen separate Magnetspulen mit jeweils eigenen Steueranschlüssen auf.

Auch dieses pneumatische System ist noch verbesserbar.

An dieser Stelle setzt die Erfindung an, deren Aufgabe es ist, eine Druckluftversorgungsanlage zum Betreiben einer Pneumatikanlage anzugeben, die hinsichtlich des Standes der Technik verbessert ist, insbesondere eine sehr kompakte Bauform und eine verlässliche und dennoch flexible, gegebenenfalls schnelle Funktionsweise aufweist. Insbesondere soll eine Druckluftversorgungsanlage vergleichsweise einfach aufgebaut sein und dennoch zum einen ein vergleichsweise schnelles Entlüften bei möglichst vorteilhafter Trocknerregeneration ermöglichen. Insbesondere soll auch eine Akustik der Druckluftversorgungsanlage verbessert sein. Aufgabe der Erfindung ist es ebenso, ein vorteilhaft gestaltetes pneumatisches System und Verfahren mit der Druckluftversorgungsanlage anzugeben. Betreffend die Druckluftversorgungsanlage wird die Aufgabe durch die Erfindung mit einer Druckluftversorgungsanlage der eingangs genannten Art gelöst, bei der erfindungsgemäß die Merkmale des kennzeichnenden Teils des Anspruchs 1 vorgesehen sind.

Die Erfindung führt auf ein pneumatisches System des Anspruchs 12 und ein Verfahren des Anspruchs 13 mit einer erfindungsgemäßen Druckluftversorgungsanlage.
Eine Druckluftversorgungsanlage wird in einem pneumatischen System mit einer Pneumatikanlage, beispielsweise einer zuvor beschriebenen Luftfederanlage, mit Druckluft betrieben, beispielsweise im Rahmen eines Druckniveaus von 5 bis 20 bar, betrieben, wobei die Druckluft der Druckluftversorgungsanlage aus einer Druckluftzuführung zur Verfügung gestellt wird. Die Druckluft kann für die Druckluftzuführung insbesondere durch ein zwischen einer Luftzuführung und einem Druckluftanschluss angeordneten Luftverdichter erzeugt werden. Die Druckluftzuführung ist zur Versorgung der Pneumatikanlage über eine erste pneumatische Verbindung mit dem Druckluftanschluss zur Pneumatikanlage verbunden. Die erste pneumatische Verbindung der eingangs genannten Druckluftversorgungsanlage weist vorteilhaft eine Pneumatikhauptleitung. Darüber hinaus weist die Druckluftversorgungsanlage der eingangs genannten Art eine mit der Pneumatikhauptleitung und einem Entlüftungsanschluss zur Umgebung pneumatisch verbundene zweite pneumatische Verbindung, vorteilhaft Entlüftungsleitung, mit einem steuerbaren Entlüftungsventil auf. Dadurch ist die Druckluftzuführung u.a. über das steuerbare Entlüftungsventil mit einem Entlüftungsanschluss zur Umgebung pneumatisch verbunden. Mittels des steuerbaren Entlüftungsventils kann durch Ablassen von Luft die Druckluftversorgungsanlage, insbesondere zur Entlüftung der Pneumatikanlage, zum Entlüftungsanschluss hin entlüftet werden.

Die Erfindung geht von der Überlegung aus, dass eine vorteilhafte Gestaltung der pneumatischen Verbindung zwischen der Druckluftzuführung und einem Druckluftanschluss zur Pneumatikanlage grundsätzlich eine Basis für eine verbesserte Trocknerregeneration, insbesondere auch eine flexible und gegebenenfalls schnelle Entlüftung der Druckluftversorgungsanlage und/oder der Pneumatikanlage bzw. Belüftung derselben ermöglichen kann. Die Erfindung geht in einer Weiterbildung von der Überlegung aus, dass eine Pneumatikhauptleitung zur Darstellung der pneumatischen Verbindung dazu vergleichsweise einfach ausgelegt werden kann. Die Erfindung hat erkannt, dass es dazu erforderlich ist, die pneumatische Verbindung bidirektional und vollständig schließbar auszugestalten. Dazu sieht die Erfindung vor, dass das steuerbare Trennventil und das Drosselmittel eine Reihenanordnung in der Pneumatikhauptleitung bilden.

Das Trennventil und/oder Entlüftungsventil sind vorteilhaft Wegeventile. Das steuerbare Trennventil, insbesondere in Form eines Wegeventils, ist - in einem Trennbetrieb - in einen geschlossenen Zustand schaltbar, wobei im geschlossenen Zustand die pneumatische Verbindung bidirektional und vollständig getrennt, d.h. geschlossen ist. Mit anderen Worten ist eine pneumatische Verbindung zwischen Druckluftzuführung und dem Druckluftanschluss zur Pneumatikanlage pneumatisch dicht verschließbar bzw. pneumatisch dicht verschlossen, wenn das steuerbare Trennventil in dem geschlossenen Zustand ist. Dies führt zu einer vorteilhaften Entkopplung von Druckluftversorgungsanlage und Pneumatikanlage. Vorteilhaft ist die Pneumatikhauptleitung ggf. zusammen mit einer weiteren Pneumatikleitung in Reihe die einzige Leitung der pneumatischen Verbindung wenigstens zwischen einem Lufttrockner der Druckluftersorgungsanlage und einer Galerieleitung einer Pneumatikanlage, insbesondere zur Bildung des erfindungsgemäßen pneumatischen Systems.

Bei einer bidirektional und vollständig trennbaren pneumatischen Verbindung ist es mit Vorteil versehen möglich, für die Pneumatikanlage, insbesondere eine Luftfederanlage, verschiedenste Betriebszustände zu realisieren, ohne dass dadurch die Druckluftversorgungsanlage beeinflusst wird - insbesondere ist dadurch eine gegebenenfalls ineffektive Beeinflussung des Lufttrockners vermieden. Vorteilhaft ist dazu die Pneumatikhauptleitung als eine einzige Leitung zur Darstellung der pneumatischen Verbindung zwischen der Druckluftzuführung und dem Druckluftanschluss vorgesehen. So kann bei pneumatisch vollständig und bidirektional verschlossener pneumatischer Verbindung in einer am Druckluftanschluss angeschlossenen Luftfederanlage vorteilhaft eine Druckmessung im Speicher oder den Bälgen stattfinden. Insbesondere hat sich auch gezeigt, dass eine Druckmessung vergleichsweise schnell erfolgen kann, die ansonsten -entweder aufgrund vergleichsweise komplexer Schaltungen oder unter ineffektiver Trocknerbeeinflussung- vergleichsweise viel Zeit in Anspruch nahm. Es kann auch ein Querschalten von Speicher und/oder Bälgen über die Galerie der Luftfederanlage erfolgen ohne dass die Druckluftversorgungsanlage, insbesondere ein Lufttrockner, beeinträchtigt würde.
Umgekehrt bietet das vorliegende Konzept einer Erfindung die Möglichkeit das steuerbare Trennventil - in einem Durchströmungsbetrieb - in einem offenen Zustand derart einzustellen, dass die Reihenanordnung aus steuerbaren Trennventil im offenen Zustand und Drosselmittel eine für das Füllen der Pneumatikanlage und das Entlüften der Pneumatikanlage optimierte Reihenanordnung darstellt, bei welcher auch eine Trocknerregeneration bzw. die Erfordernisse einer flexibel und gegebenenfalls schnell betätigbaren Druckluftversorgungsanlage erfüllt sind.
Erfindungsgemäß lässt sich dies besonders gut dadurch umsetzen, dass das steuerbare Trennventil und das steuerbare Entlüftungsventil eingerichtet sind mit einem für beide gemeinsamen Steuersignal gesteuert zu werden. Insbesondere sind beide mit einer für beide gemeinsamen Steuerleitung mit einer elektronischen Steuerung verbunden. So können Steuersignale in einer für beide gemeinsamen Steuerleitung von einer insbesondere gemeinsamen elektronischen Steuerung übertragen werden. Insbesondere hat es sich als vorteilhaft erwiesen, dass das steuerbare Trennventil mit einer ersten Spule und das steuerbare Entlüftungsventil mit einer zweiten Spule gebildet ist, wobei die erste und zweite Spule mit einem einzigen bei den Spulen gemeinsamer Spulenkörper gebildet sind. Vorzugsweise kann die Spule mit einem im Spulenkörper angeordneten einen ersten Ventilkörper aufweisenden ersten Spulenanker und mit einem im Spulenkörper angeordneten einen zweiten Ventilkörper aufweisenden zweiten Spulenanker gebildet sein. Ein in spezieller Ausführung auch Doppelanker-Magnetventil genanntes Wegeventil kann somit in einer sehr kompakten Bauform sowohl das Trennventil als auch das Entlüftungsventil realisieren.

Im Rahmen einer besonders bevorzugten Weiterbildung verläuft die Pneumatikhauptleitung der pneumatischen Verbindung zwischen der Druckluftzuführung und einem Druckluftanschluss zur Pneumatikanlage. Dies führt in vorteilhafter Weise dazu, dass das wenigstens eine Trennventil innerhalb einer als Einheit gestaltbaren Druckluftversorgungsanlage angeordnet sein kann. Vorteilhaft ist in einem geschlossenen Zustand des steuerbaren Trennventils die Pneumatikhauptleitung zwischen dem Lufttrockner und dem Druckluftanschluss bidirektional und vollständig geschlossen.

Die im Folgenden beschriebenen bevorzugten Weiterbildungen hinsichtlich einer Druckluftversorgungsanlage können für das wenigstens eine steuerbare Trennventil realisiert werden, welches innerhalb einer als Einheit gestaltbaren Druckluftversorgungsanlage angeordnet ist. Vorteilhafte Weiterbildungen der Erfindung - insbesondere auch des pneumatischen Systems und des Verfahrens - sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.
Wenigstens das steuerbare Trennventil ist erfindungsgemäß zwischen einem ersten Steuerzustand und einem zweiten Steuerzustand umschaltbar. Dabei ist der erste Steuerzustand einem geschlossenen Zustand des steuerbaren Trennventils zugeordnet und der zweite Steuerzustand ist einem geöffneten Zustand des steuerbaren Trennventils zugeordnet. Der erste und/oder zweite Steuerzustand lässt sich vorteilhaft wenigstens dem steuerbaren Trennventil über eine elektronische Steuerung vorgeben, beispielsweise mittels einem geeigneten über eine Steuerleitung geführten Steuersignal an das steuerbare Trennventil. Der erste Steuerzustand kann derart gestaltet sein, dass das Trennventil vollständig in den geschlossenen Zustand übergeht. Der erste Steuerzustand kann auch so gestaltet sein, dass das Trennventil mit Beginn des Schaltvorgangs beginnt in den geschlossenen Zustand überführt zu werden, ohne dass der geschlossene Zustand erreicht wird. Ebenso kann der zweite Steuerzustand das steuerbare Trennventil in den vollständig geöffneten Zustand überführen. Der zweite Steuerzustand kann auch so gestaltet sein, dass das steuerbare Trennventil mit Beginn des Schaltvorgangs teilweise öffnet und sich im weiteren Verlauf auf den vollständig geöffneten Zustand hin bewegt, ohne dass der vollständig geöffnete Zustand erreicht wird. Beispielsweise können der erste und zweite Steuerzustand derart gestaltet sein, dass sich das steuerbare Trennventil dynamisch zwischen einem vollständig geschlossenen und einem vollständig geöffneten Zustand hin und her bewegt, ohne dass das steuerbare Trennventil vollständig geschlossen oder vollständig geöffnet wäre.

Aufgrund der erfindungsgemäßen Reihenanordnung von Trennventil und Drosselmittel ist die Pneumatikhauptleitung vergleichsweise einfach, flexibel und dennoch verlässlich zu betätigen ausgestaltet. Besonders bevorzugt ist vorgesehen, dass wenigstens für das steuerbare Trennventil, d.h. gegebenenfalls auch für das steuerbare Entlüftungsventil, im Durchströmungsbetrieb eine Durchflussmenge regelbar und/oder steuerbar ist. Die Erfindung hat im Rahmen der vorgenannten Weiterbildung erkannt, dass das steuerbare Trennventil derart angesteuert werden kann, dass sich für die Reihenanordnung mit dem Drosselmittel eine für Entlüftung, Belüftung und gleichermaßen für Trocknerregeneration und Akustik der Druckluftversorgungsanlage vorteilhafte Einstellung ergibt. Insbesondere lässt sich auch bei vergleichsweise schnellen Entlüftungsvorgängen das steuerbare Trennventil im Durchströmungsbetrieb hinsichtlich einer Durchflussmenge einer Druckluftströmung derart regeln und/oder steuern, dass ein Entlüftungsknall vermieden ist. Ein Entlüftungsknall wäre für eine Druckluftversorgungsanlage immer dann zu befürchten, wenn ein zu großes Druckluftvolumen bei zu hohem Druck in einem zu kurzen Zeitraum entlüftet würde.

Es hat sich gezeigt, dass eine Gestaltung und Abstimmung von ersten und zweiten Steuerzuständen vorteilhaft zur Realisierung einer effektiven Nennweite der Reihenanordnung aus Drosselmittel und steuerbarem Trennventil genutzt werden kann. So kann im Rahmen einer besonders bevorzugten Weiterbildung wenigstens das steuerbare Trennventil im Durchströmungsbetrieb derart zwischen dem ersten und zweiten Steuerzustand umschaltbar sein, dass eine effektive Nennweite der Reihenanordnung aus Drosselmittel und steuerbarem Trennventil unterhalb einer tatsächlichen Nennweite des Drosselmittels liegt. Im Rahmen dieser besonders bevorzugten Weiterbildung lässt sich über die Reihenanordnung praktisch eine verstellbare elektromagnetisch steuerbare Drossel realisieren, wobei dennoch gewährleistet ist, dass die pneumatische Verbindung bidirektional und vollständig trennbar ist. Auf diese Weise werden zum einen die mit dem Konzept der Erfindung verfolgten Vorteile realisiert. Darüber hinaus ist es vorteilhaft möglich für das steuerbare Trennventil im Durchströmungsbetrieb eine Durchflussmenge regelbar und/oder steuerbar einzustellen.

Besonders vorteilhaft ist - gegebenenfalls auf den Zustand des steuerbaren Trennventils abgestimmt - zusätzlich für das steuerbare Entlüftungsventil eine Durchflussmenge einer Druckluftströmung steuerbar und/oder regelbar. Insbesondere ist das steuerbare Entlüftungsventil im Durchströmungsbetrieb hinsichtlich einer Durchflussmenge einer Druckluftströmung regelbar und/oder steuerbar. Das steuerbare Trennventil und/oder das steuerbare Entlüftungsventil sind dazu vorzugsweise aufeinander abgestimmt regelbar und/oder steuerbar. Insbesondere kann das steuerbare Trennventil und/oder das steuerbare Entlüftungsventil mit einer Steuerung verbunden sein. Insbesondere handelt es sich dabei um eine gemeinsame elektronische Steuerung. Grundsätzlich können jedoch auch zwei gekoppelte elektronische Steuerungen vorgesehen sein, die derart eingerichtet sind, dass ein Steuerzustand des Entlüftungsventils angepasst ist auf einen Steuerzustand des Trennventils.

Die Steuerung kann einen Steuerzustand des Trennventils und/oder Entlüftungsventils anhand verschiedenster Parameter festlegen. Die Parameter können beispielsweise im Rahmen einer Sensorik festgestellt, einer ECU oder sonstigen Fahrzeugsteuerung oder einer Heuristik entnommen sein. Besonders vorteilhaft lässt sich das steuerbare Trennventil und/oder das steuerbare Entlüftungsventil mittels einer elektronischen Steuerung in Abhängigkeit einer Belüftungs- oder Entlüftungssituation regeln und/oder steuern. Vorzugsweise wird dabei ein Trocknerzustand, insbesondere ein Trocknerregenerationsbedarf berücksichtigt. Besonders vorteilhaft werden die Akustik der Druckluftversorgungsanlage beeinflussende, insbesondere mögliche für ein Entlüftungsknall verantwortliche, Umstände berücksichtigt.

Vorzugsweise können Zustandswerte, wie ein Galeriedruck, eine Ablasscharakteristik der Pneumatikanlage, eine Schaltgeschwindigkeit des Trennventils und/oder Entlüftungsventils oder ein Differenzwert zwischen Soll- und Ist-Wert einer Druckluftversorgungsanlage und/oder Pneumatikanlage genutzt werden.

Grundsätzlich ist ein erster Steuerzustand und/oder ein zweiter Steuerzustand variabel einstellbar. Dies ermöglicht beispielsweise einen variablen zeitlichen Verlauf eines Schaltvorgangs oder einer Schaltamplitude wenigstens des steuerbaren Trennventils.

So kann beispielsweise das steuerbare Trennventil zwischen dem ersten und zweiten Steuerzustand kontinuierlich umschaltbar sein. Es kann beispielsweise auch eine Schaltgeschwindigkeit und/oder eine Gesamtöffnungszeit und/oder eine Gesamtschließzeit eines Trennventils vorteilhaft eingestellt werden.

Im Rahmen einer besonders bevorzugten Weiterbildung hat es sich als vorteilhaft erwiesen, dass wenigstens das steuerbare Trennventil zwischen dem ersten und dem zweiten Steuerzustand mit einer Taktrate einer Steuerzustandsänderung hin und her umschaltbar ist. Insbesondere können unterschiedliche Taktraten einer Steuerzustandsänderung vorgesehen sein. Beispielsweise kann das steuerbare Trennventil in einem ersten Zeitabschnitt zwischen dem ersten und zweiten Steuerzustand mit einer ersten Taktrate getaktet hin und her umschaltbar sein und in einem zweiten Zeitabschnitt mit einer zweiten Taktrate getaktet hin und her umschaltbar sein. So lassen sich elektronisch eine oder mehrere effektive Nennweiten gemäß der oben erläuterten vorteilhaften Weiterbildung für die Reihenanordnung aus Drosselmittel und steuerbarem Trennventil realisieren. Grundsätzlich kann eine Taktrate einer Steuerzustandsänderung vorteilhaft genutzt werden, um eine geeignete effektive Nennweite der Reihenanordnung einzustellen. Es hat sich gezeigt, dass eine Taktrate zwischen 4 Hz und 20 Hz besonders geeignet ist, um eine effektive Nennweite derart einzustellen, dass über die Reihenanordnung der Druckluftversorgungsanlage eine vergleichsweise verbesserte Akustik und Regenerationsfähigkeit des Trockners zur Verfügung gestellt wird. Die Taktrate einer Steuerzustandsänderung lässt sich im angegebenen Frequenzbereich auch in Anbetracht der trägen Masse des Ankers des steuerbaren Trennventils realistisch in eine Hin- und Her-Bewegung des Ankers mit der Taktrate umsetzen.

Unter einem Drosselmittel ist grundsätzlich jedes einen Leitungsquerschnitt der Pneumatikhauptleitung verengendes Mittel zu verstehen. Eine bevorzugte Nennweite der Pneumatikhauptleitung liegt oberhalb von 4 mm. Das Drosselmittel hat bevorzugt eine durch den kleinsten lichten Drosselquerschnitt festgelegte tatsächliche Nennweite oberhalb von 0,6 mm. Je nach Leitungsquerschnitt der Pneumatikhauptleitung kann ein Drosselquerschnitt bis zu 8 mm betragen. Bevorzugt liegt eine tatsächliche Nennweite des Drosselmittels zwischen 1 und 3 mm, insbesondere bei 2,5 mm. Gemäß der oben erläuterten besonders bevorzugten Weiterbildung der Erfindung liegt eine effektive Nennweite der Reihenanordnung aus Drosselmittel und steuerbarem Trennventil unterhalb der so vorgegebenen tatsächlichen Nennweite des Drosselmittels.

Besonders bevorzugt ist das Drosselmittel als eine vom Trennventil separate Drossel gebildet. Dies kann, wie erläutert, grundsätzlich jede Art einer Veränderung des Leitungsquerschnitts der Pneumatikhauptleitung sein oder eine speziell ausgebildete Drosseleinrichtung. Ein Drosselmittel kann auch im Trennventil und/oder in einem weiteren Ventil gebildet sein, beispielsweise durch eine Öffnung eines Ventilsitzes des Trennventils und/oder dem weiteren Ventil.

Besonders vorteilhaft wird das steuerbare Trennventil und/oder das steuerbare Entlüftungsventil mittels einem Steuersignal zwischen dem ersten und zweiten Steuerzustand umgeschaltet. Das Steuersignal ist vorzugsweise in Form eines Pulsweiten modulierten Steuersignals (PWM-Steuersignal) gebildet. Ein Steuersignal ist vorteilhaft in Form eines Strom- und/oder Spannungssignals gebildet. Vorzugsweise wird ein PWM-Steuersignal mit einer geeigneten Frequenz und einem geeigneten Puls/Pausenverhältnis zur Verfügung gestellt. Als besonders bevorzugt hat sich eine Frequenz zwischen 5 kHz und 20 kHz und ein ausreichend feinstufig einstellbares Pulspausenverhältnis zwischen 1:100 und 100:1 erwiesen. Es kann auch bei Bedarf ein etwas gröberes Pulspausenverhältnis zwischen 1:10 und 10:1 ausreichend sein.

Gemäß der vorgenannten Weiterbildung lässt sich beispielsweise einem ersten Steuerzustand eines Trennventils und/oder Entlüftungsventils ein erstes PWM-Steuersignal und einem zweiten Steuerzustand eines Trennventils und/oder Entlüftungsventils ein zweites PWM-Steuersignal zuordnen. Vorteilhaft lässt sich über eine Frequenz und/oder ein Pulspausenverhältnis eines getakteten Steuersignals, insbesondere eines PWM-Steuersignal, eine effektive Nennweite der Reihenanordnung einstellen.

Bevorzugt ist das steuerbare Trennventil und/oder das steuerbare Entlüftungsventil eingerichtet mit einem für beide gemeinsamen Steuersignal gesteuert zu werden. Dazu lassen sich Schaltpunkt und Schaltzustände von Trennventil und/oder Entlüftungsventil vorteilhaft aufeinander abstimmen. Schaltpunkte und Schaltamplituden von Trennventil und Entlüftungsventil lassen sich durch die Steuersignale und/oder durch geeignete Auslegung von Ventilfedern ausbilden.

Vorzugsweise sind das steuerbare Trennventil und das Entlüftungsventil in dem Trennbetrieb stromlos geschlossen. Insbesondere hat es sich als vorteilhaft erwiesen, dass das Entlüftungsventil in einen Durchströmungsbetrieb übergeht erst nachdem das Trennventil in den offenen Zustand geschaltet ist. Dadurch kann vorteilhaft ein Entlüftungsknall vermieden werden, da zunächst unter Öffnen des Trennventils eine teilweise Druckentspannung erfolgen kann, bevor das Entlüftungsventil öffnet. Das Entlüftungsventil öffnet also bei niedrigerer Druckamplitude, was zur Verringerung einer Akustik vorteilhaft ist.
Im Rahmen einer ersten besonders bevorzugten Variante ist das Entlüftungsventil als direkt geschaltetes Ventil Teil einer Magnetventilanordnung zur direkten Schaltung des Druckluftvolumens, wobei die Magnetventilanordnung frei von einem Steuerventil ist. Mit anderen Worten dient die Magnetventilanordnung gemäß dieser Variante zur Realisierung einer direkt gesteuerten Entlüftungsmagnetventilanordnung. Es hat sich gezeigt, dass durch direkte Schaltung eines Gesamtdruckluftvolumens die Schaltzeit der direkt gesteuerten Entlüftungsmagnetventilanordnung unterhalb von indirekt gesteuerten Entlüftungsmagnetventilanordnung liegen kann; dies bei gleich großen Entlüftungsquerschnitten. Wie von dieser Variante erkannt, hat dies Vorteile bei der Entlüftung der Druckluftversorgungsanlage unter Regeneration des Lufttrockners.

In einer zweiten besonders bevorzugten weiterbildenden Variante ist das Entlüftungsventil als indirekt geschaltetes Relaisventil Teil einer Magnetventilanordnung zur indirekten Schaltung eines Druckluftvolumens. Die Magnetventilanordnung weist ein einem Druck der Pneumatikhauptleitung ausgesetztes Steuerventil zur Steuerung des Relaisventils auf. In einer ersten bevorzugten Abwandlung kann der Druck ein Gesamtdruck in der Pneumatikhauptleitung sein. In einer zweiten Abwandlung kann der Druck auch ein Teildruck der Pneumatikhauptleitung sein. Mit anderen Worten dient die Magnetventilanordnung gemäß dieser zweiten Variante zur Realisierung einer indirekt gesteuerten Entlüftungsmagnetventilanordnung. Es hat sich gezeigt, dass durch indirekte Schaltung eines Gesamtdruckluftvolumens ein Steuerdruck vergleichsweise gering gehalten werden kann. Wie von der ersten Abwandlung dieser zweiten Variante erkannt, lässt sich durch Nutzung eines Gesamtdrucks in der Pneumatikhauptleitung für das Steuerventil dennoch eine vergleichsweise schnelle Schalttätigkeit des Entlüftungsventils erzielen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der beanspruchten Erfindung abzuweichen. Der Einfachheit halber sind nachfolgend für identische oder ähnliche Teile oder Teile mit identischer oder ähnlicher Funktion gleiche Bezugszeichen verwendet.
Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

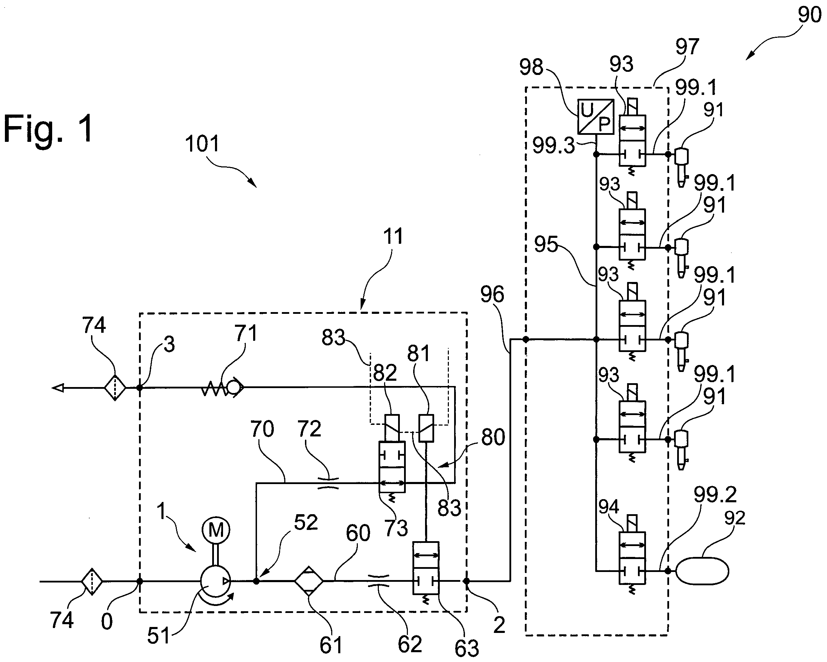

Fig. 1 ein Schaltbild eines pneumatischen Systems mit einer besonders bevorzugten Ausführungsform einer Druckluftversorgungsanlage gemäß einer ersten weiterbildenden Variante, bei welcher das Entlüftungsventil als direkt geschaltetes Ventil Teil einer Magnetventilanordnung zur direkten Schaltung des Gesamtdruckluftvolumens ist - eine pneumatische Verbindung verläuft zwischen einer Druckluftzuführung und einem Druckluftanschluss zur Pneumatikanlage und hat ein einziges Trennventil;

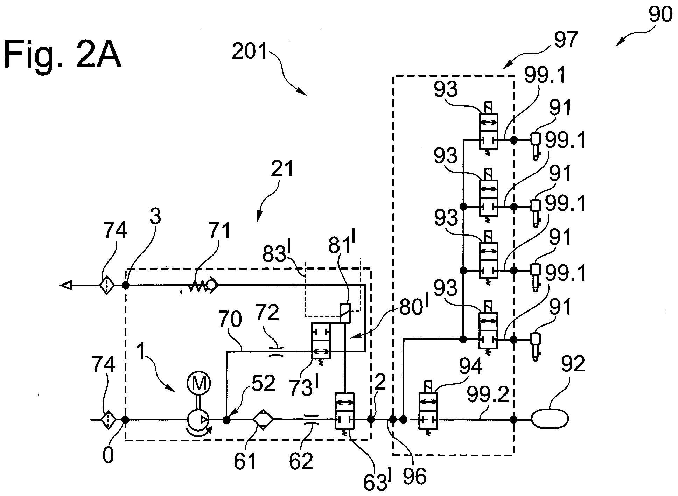

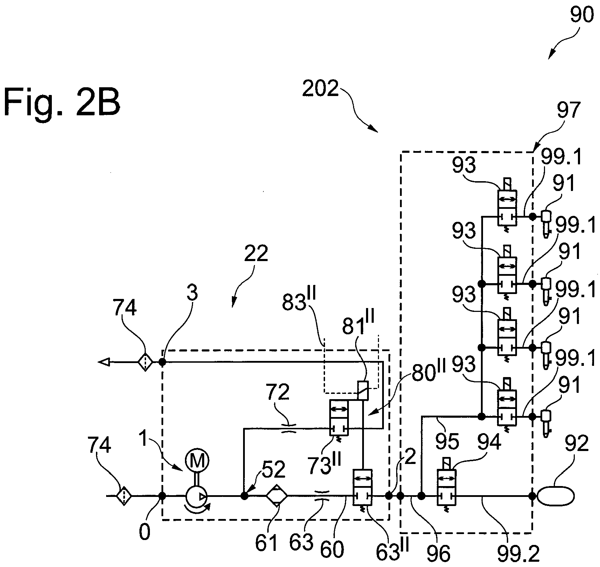

Fig. 2A, 2B Schaltbilder pneumatischer Systeme mit jeweils einer weiteren Ausführungsform einer Druckluftversorgungsanlage ähnlich der Fig. 1, wobei weiter das Entlüftungsventil und das Trennventil als ein Doppelanker-Magnetventil gebildet sind - dies für unterschiedliche stromlos-Zustände (A, B) des Entlüftungsventils mit stromlos geschlossenem Trennventil;

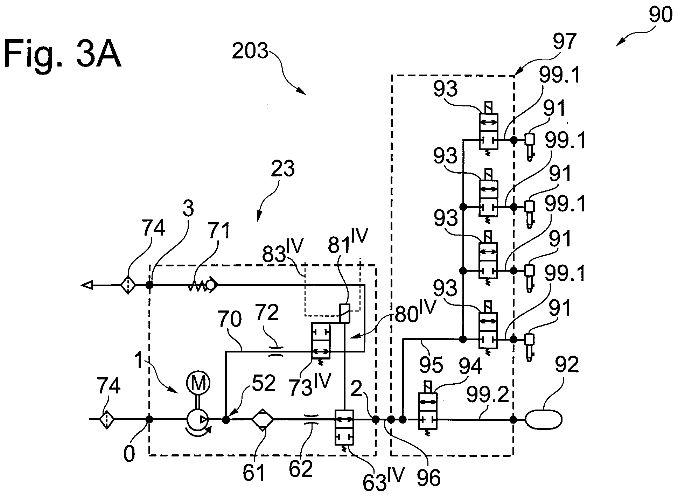

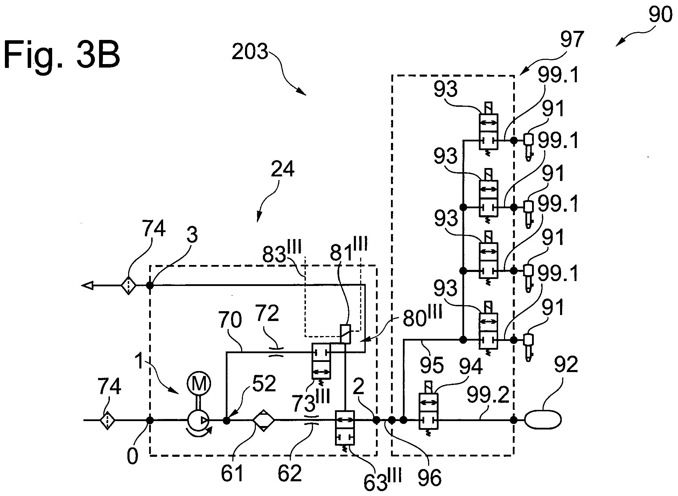

Fig. 3A, 3B Schaltbilder pneumatischer Systeme mit einer weiteren Ausführungsform einer Druckluftversorgungsanlage in Abwandlung der Ausführungsformen der Fig. 2A, Fig. 2B - dies für unterschiedliche stromlos-Zustände (A, B) des Entlüftungsventils mit stromlos offenem Trennventil;

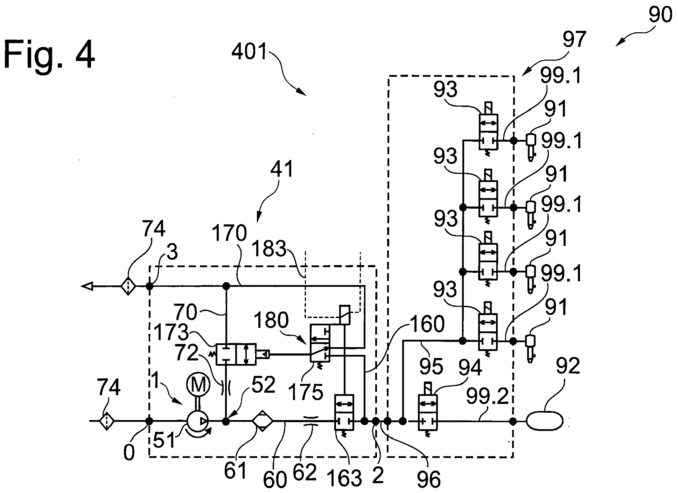

Fig. 4 ein Schaltbild eines pneumatischen Systems mit einer weiteren besonders bevorzugten Ausführungsform einer Druckluftversorgungsanlage gemäß der weiterbildenden zweiten Variante der Erfindung, bei welcher das Entlüftungsventil als indirekt geschaltetes Relaisventil Teil einer Magnetventilanordnung zur indirekten Schaltung eines Druckluftvolumens ist, wobei die Magnetventilanordnung ein einem Gesamtdruck der Pneumatikhauptleitung ausgesetztes Steuerventil zur Steuerung des Relaisventils aufweist - wiederum verläuft, wie bei Fig. 1, eine pneumatische Verbindung zwischen einer Druckluftzuführung und einem Druckluftanschluss zur Pneumatikanlage und hat ein einziges Trennventil;

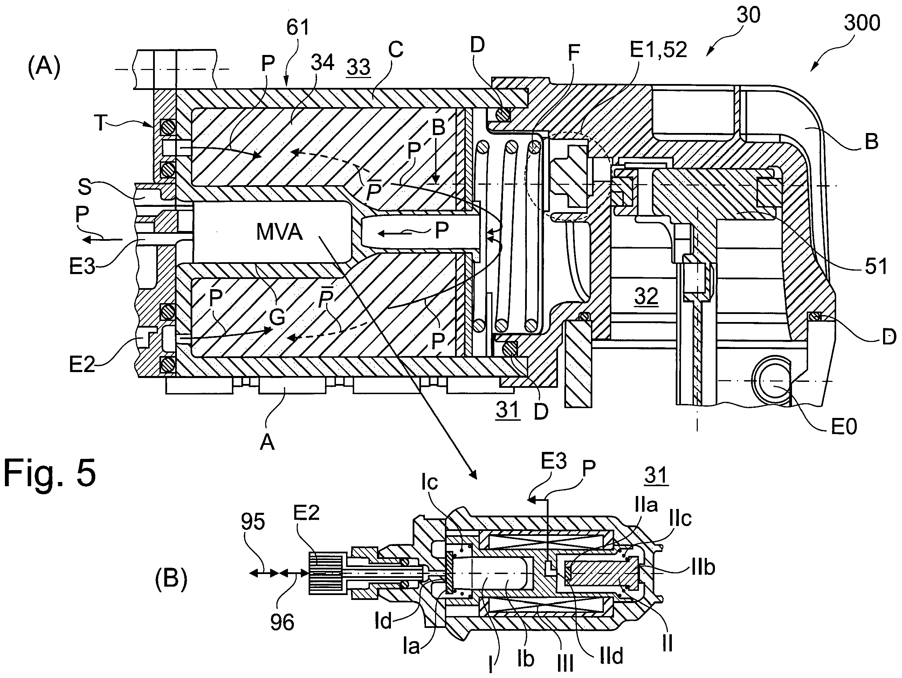

Fig. 5 eine Druckluftversorgungsanlage gemäß Fig. 2A oder Fig. 2B mit einem Doppelanker-Magnetventil in einer bevorzugten konstruktiven Realisierung;

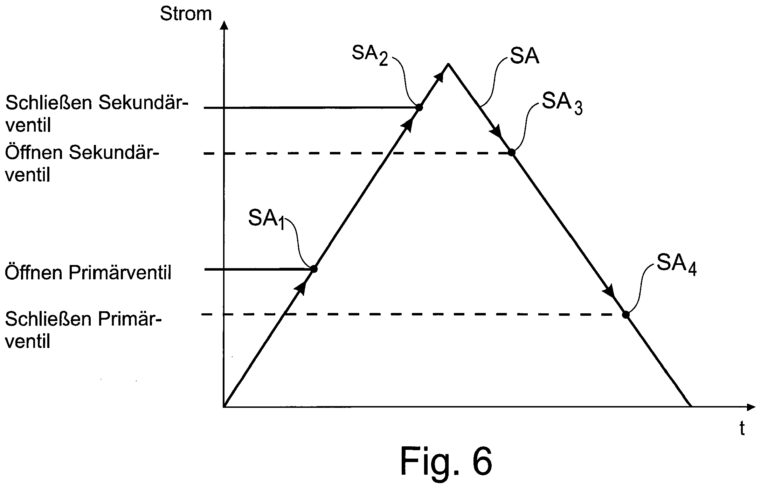

Fig. 6 eine Grafik einer beispielhaften Stromamplitude eines Steuersignals im zeitlichen Verlauf zur Verdeutlichung von Schaltströmen für ein Entlüftungsventil und ein Trennventil, die -im Rahmen eines Doppelanker-Magnetventils der Fig. 2A und Fig. 5- über eine gemeinsame Steuerleitung für Primärventil und Sekundärventil realisiert sind;

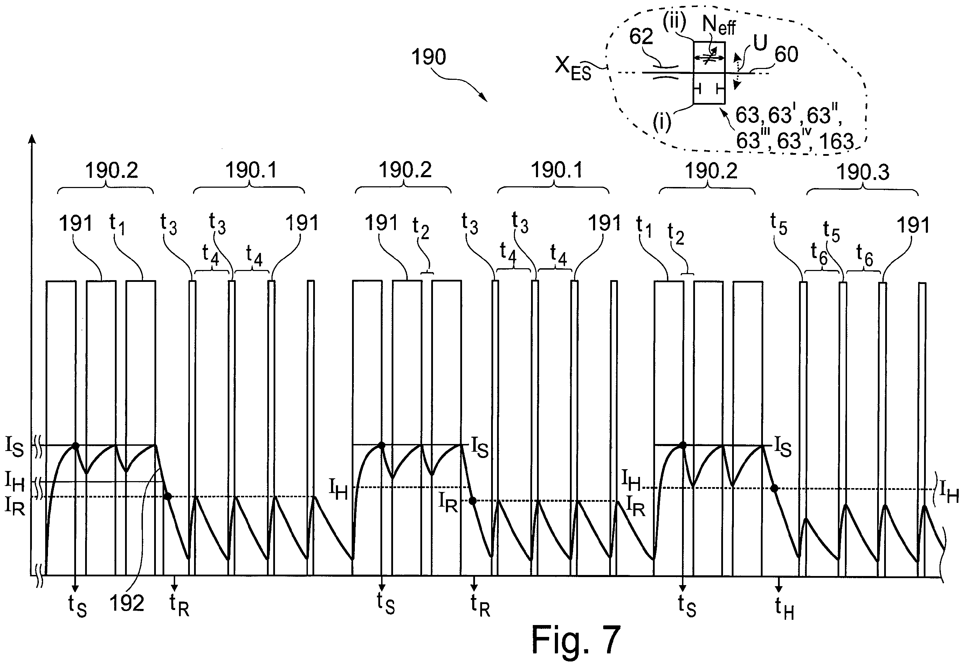

Fig. 7 eine Grafik eines stark vereinfachten zeitlichen Verlaufs eines PWM-Steuersignals in Form eines Spannungssignals sowie des dazugehörigen Stromsignals in Bezug auf Schwellströme I_{S} zur Schaltung eines Magnetventils, I_{H} zum Halten eines Magnetventils im geschalteten Zustand und I_{R} zum Rückführen eines Magnetventils in einen ursprünglichen Ruhezustand - dies zur Veranschaulichung einer beispielhaften Taktrate einer Steuerzustandsänderung zum Hin- und Her -Umschalten des steuerbaren Trennventils zwischen einem ersten und zweiten Steuerzustand -im Rahmen eines Doppelanker-Magnetventils der Fig. 2A und Fig. 5;

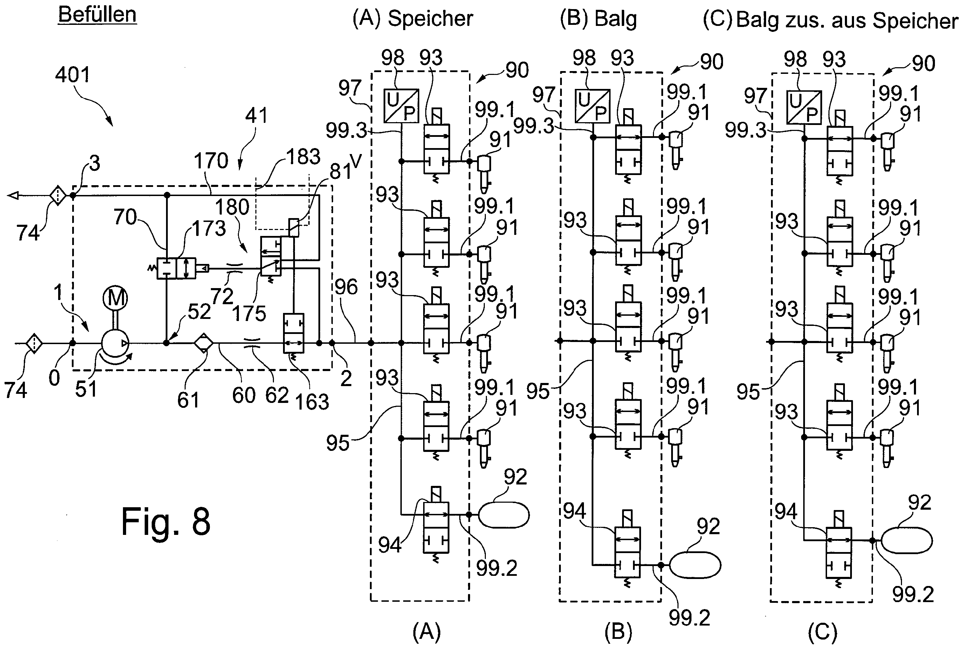

Fig. 8 bevorzugte Betriebszustände (A-C) eines pneumatischen Systems bei Befüllung der Pneumatikanlage gemäß der in Fig. 4 gezeigten weiterbildenden zweiten Variante;

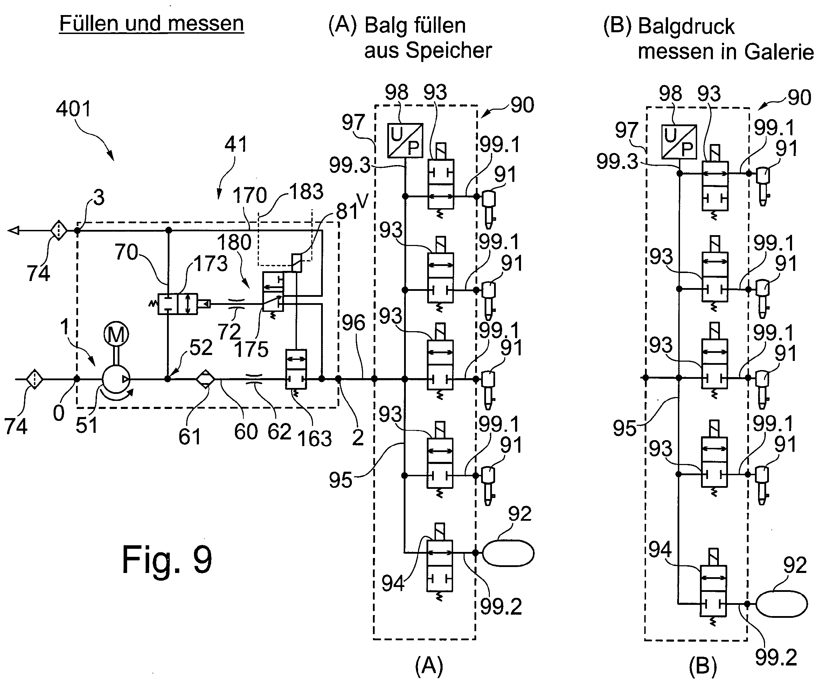

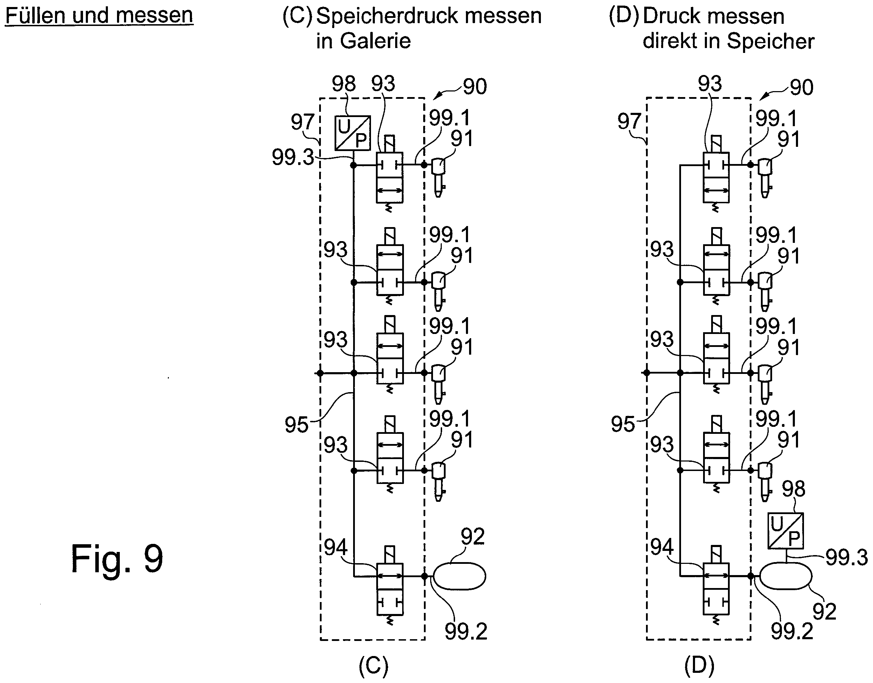

Fig. 9 bevorzugte Betriebszustände (A-D) eines pneumatischen Systems beim Messen innerhalb der Pneumatikanlage gemäß der in Fig. 4 gezeigten weiterbildenden zweiten Variante;

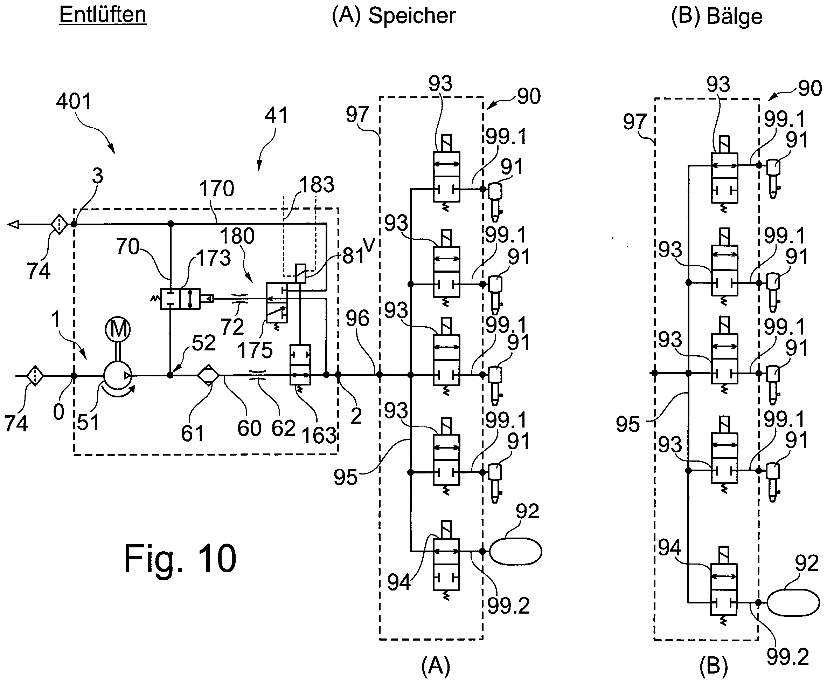

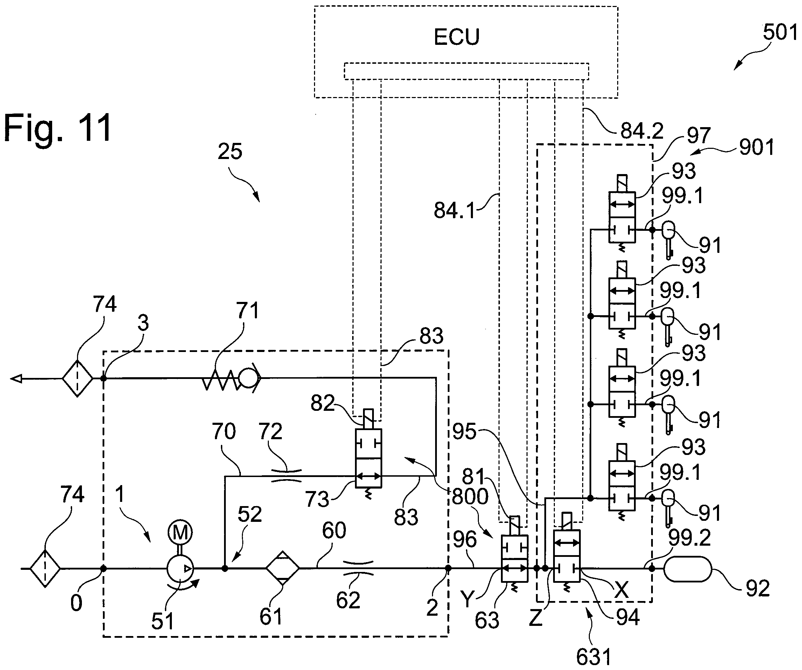

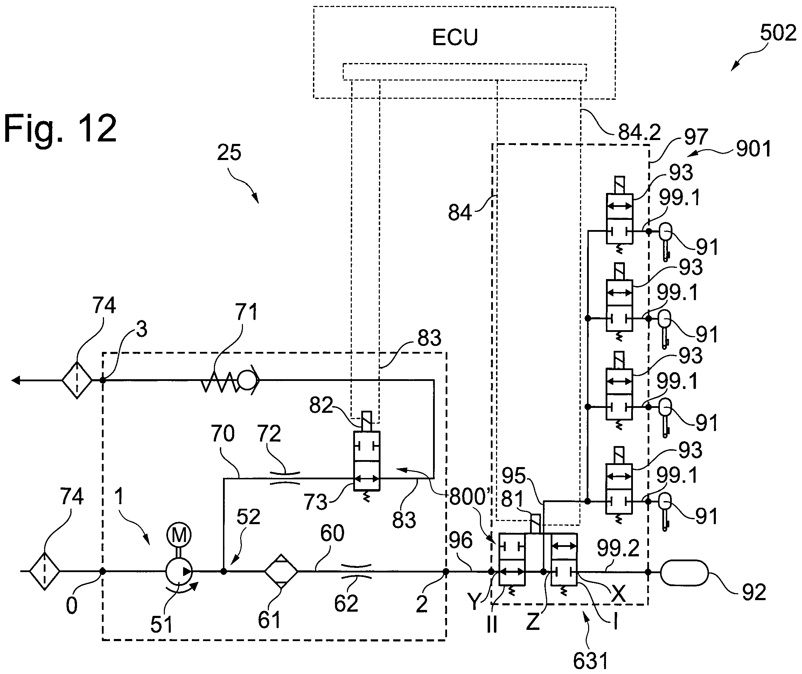

Fig. 10 bevorzugte Betriebszustände (A, B) eines pneumatischen Systems beim Entlüften der Pneumatikanlage gemäß der in Fig. 4 gezeigten weiterbildenden zweiten Variante;

Fig. 1 zeigt ein pneumatisches System 101 mit einer Druckluftversorgungsanlage 11 und einer Pneumatikanlage 90, vorliegend in Form einer Luftfederanlage. Die Luftfederanlage weist eine Anzahl von vier sogenannten Bälgen 91 auf, die jeweils einem Rad eines nicht näher dargestellten Fahrzeugs zugeordnet sind und eine Luftfeder des Fahrzeugs bilden. Des Weiteren weist die Luftfederanlage einen Speicher 92 zur Speicherung schnell verfügbarer Druckluft für die Bälge 91 auf. Den Bälgen 91 ist jeweils in einer Balg-Zweigleitung 99.1 ein Balg-Magnetventil 93 vorgeordnet, welches jeweils als Luftfederventil zum Öffnen oder Schließen einer durch einen Balg 91 gebildeten Luftfeder dient. Dem Speicher 92 ist in einer Speicher-Zweigleitung 99.2 ein Speicher-Magnetventil 94 als Speicherventil vorgeordnet. Die Balg-Magnetventile 93 und das Speicher-Magnetventil 94 sind mittels der Balg- und Speicher-Zweigleitungen 99.1, 99.2 an eine gemeinsame, eine Galerieleitung 95 bildende Pneumatikleitung angeschlossen. Die Galerieleitung 95 ist über eine weitere Pneumatikleitung 96 mit einem Druckluftanschluss 2 der Druckluftversorgungsanlage 11 pneumatisch verbunden. Vorliegend sind die als Niveauregelventile dienenden Balg-Magnetventile 93 zusammen mit dem Speicher-Magnetventil 94 in einem Ventilblock 97 mit fünf Ventilen angeordnet. Andere hier nicht gezeigte abgewandelte Ausführungsformen können eine andere Anordnung der Balg-Magnetventile 93 und des Speicher-Magnetventils 94 realisieren - es können auch weniger Magnetventile im Rahmen des Ventilblocks 97 genutzt werden. Vorliegend ist die Pneumatikanlage 90 mit einem Drucksensor 98 versehen, welcher über eine Sensor-Zweigleitung 99.3 an der Galerieleitung 95 angeschlossen ist, so dass über den Drucksensor 98 ein Druck in der Galerieleitung 95 der Pneumatikanlage 90 gemessen werden kann. Unter einer Galerie ist ganz allgemein jede Art einer Sammelleitung zu verstehen, von der Zweigleitungen oder weitere Pneumatikanlagen abgehen.

Die Balg-Magnetventile 93 und das Speicher-Magnetventil 94 sind in Fig. 1 in einem stromlosen Zustand gezeigt - dabei sind die Balg-Magnetventile 93 und das Speicher-Magnetventil 94 als stromlos geschlossene Magnetventile gebildet.

Die Druckluftversorgungsanlage 11 dient zum Betreiben der Pneumatikanlage 90. Die Druckluftversorgungsanlage 11 weist eine Druckluftzuführung 1 und einen Druckluftanschluss 2 zur Pneumatikanlage 90 auf. Die Druckzuführung 1 ist vorliegend mit einer Luftzuführung 0, einem Luftverdichter 51 und einem Druckluftzuführungsanschluss 52 mittels einer geeignet ausgebildeten Schnittstelle gebildet. Der Luftverdichter 51 wird durch einen Antrieb, vorliegend in Form eines Motors M, angetrieben. Die pneumatische Verbindung zwischen Luftzuführung 1 und Druckluftanschluss 2 ist vorliegend mit einer einzigen Pneumatikhauptleitung 60 gebildet, die einerseits am Druckluftzuführungsanschluss 52 und andererseits an den Druckluftanschluss 2 angeschlossen ist. Die pneumatische Verbindung wird am Anschluss 2 durch die weitere Pneumatikleitung 96 zur Galerieleitung 95 fortgesetzt. In der Pneumatikhauptleitung 60 ist ein Lufttrockner 61, eine erste Drossel 62 und ein steuerbares Trennventil 63 in Form eines als Magnetventil ausgebildeten 2/2-Wegeventils angeordnet. Die Drossel 62 und das Trennventil 63 bilden eine pneumatische Reihenanordnung in der Pneumatikhauptleitung 60.

Weiter weist die Druckluftversorgungsanlage 11 eine mit der Pneumatikhauptleitung 60 und einem Entlüftungsanschluss 3 zur Umgebung pneumatisch verbundene Entlüftungsleitung 70 auf. Dem Entlüftungsanschluss 3 vorgeordnet ist ein in der Entlüftungsleitung 70 vorgeordnetes Entlüftungsventil 71. Vorliegend ist die Entlüftungsleitung 70 am Druckluftzuführungsanschluss 52 an der Pneumatikhauptleitung 60 angeschlossen.

In Richtung des Entlüftungsanschlusses 3 ist in der Entlüftungsleitung 70 eine zweite Drossel 72 und ein steuerbares -hier stromlos offenes- Entlüftungsventil 73 angeordnet. Dem Entlüftungsanschluss 3 zur Umgebung nachgeordnet ist ein Filter 74. Ähnlich kann ein hier nicht gezeigter Filter der Luftzuführung 0 vorgeordnet sein.

Die in Fig. 1 gezeigte Druckluftversorgungsanlage 11 sieht das Entlüftungsventil 73 als einziges und direkt geschaltetes Ventil zu direkten Schaltung eines Druckluftvolumens in der Entlüftungsleitung 70 vor. Ein zusätzliches Steuerventil ist bei der Druckluftversorgungsanlage 11 nicht vorgesehen.

Das Entlüftungsventil 73 ist Teil einer mit dem Trennventil 63 gebildeten Magnetventilanordnung 80. Die Magnetventilanordnung 80 sieht eine erste Spule 81 für das steuerbare Trennventil 63 und eine von der ersten Spule 81 separat gebildete zweite Spule 82 für das steuerbare Entlüftungsventil 73 vor. Insbesondere ist die erste Spule 81 und die zweite Spule 82 mit jeweils einem separaten Spulenkörper gebildet. Allerdings ist das steuerbare Trennventil 63 und das steuerbare Entlüftungsventil 73 eingerichtet, mit einem für beide gemeinsamen Steuersignal über eine für beide gemeinsame Steuerleitung 83, gesteuert zu werden. Die zweite Spule 82 weist vorliegend keine separate Steuerleitung auf, sondern ist vielmehr mit der Steuerleitung 83 verbunden.

Die im Folgenden kumulativ beschriebenen Fig. 2A und Fig. 2B zeigen jeweils ein pneumatisches System 201, 202 mit einer zuvor beschriebenen Pneumatikanlage 90 und jeweils abgewandelten Ausführungen einer Druckluftversorgungsanlage 21 bzw. 22. Die Druckluftversorgungsanlagen 21, 22 sind im Wesentlichen wie die Druckluftversorgungsanlage 11 aufgebaut, wobei für identische oder ähnliche Teile oder Teile identischer oder ähnlicher Funktion gleiche Bezugszeichen verwendet werden. Insofern wird auf die Beschreibung der Druckluftversorgungsanlage 11 verwiesen; im Folgenden werden vor allem die Unterschiede zur Druckluftversorgungsanlage 11 erläutert.

Die Druckluftversorgungsanlage 21 weist eine Magnetventilanordnung 80' mit einem steuerbaren Trennventil 63' und einem steuerbaren Entlüftungsventil 73' auf. Das Trennventil 63' und das Entlüftungsventil 73' sind wiederum als 2/2-Wegeventile ausgeführt, wobei die Trennventile 63, 63' als stromlos geschlossene Wegeventile und die Entlüftungsventile 73, 73' als stromlos offene Wegeventile ausgeführt sind. Im Unterschied zur Magnetventilanordnung 80 der Druckluftversorgungsanlage 11 ist vorliegend bei der Magnetventilanordnung 80' der Druckluftversorgungsanlage 21 das steuerbare Trennventil 63' mit einer ersten Spule und das steuerbare Entlüftungsventil 73' mit einer zweiten Spule gebildet, wobei die erste und die zweite Spule - vorliegend symbolisch als Spule 81' dargestellt - mit einem einzigen, beiden Spulen gemeinsamen Spulenkörper gebildet ist. Die Spule 81' ist wiederum mit einer Steuerleitung 83', ähnlich wie die Steuerleitung 83, an einer nicht näher dargestellte Steuerung oder an ein nicht näher dargestelltes Steuermodul angebunden. Die Steuerung oder das Steuermodul kann Teil einer Fahrzeugsteuerung (ECU) sein oder an die Fahrzeugsteuerung angeschlossen sein. Dieselbe Steuerung bzw. das dasselbe Steuermodul steht - wie bei der Druckluftversorgungsanlage 11 - sowohl für ein Trennventil 63, 63' als auch ein Entlüftungsventil 73, 73' zur Verfügung. Insbesondere wird die Spule 81' der Druckluftversorgungsanlage 21 mittels einem für Trennventil 63' und Entlüftungsventil 73' gemeinsame Steuersignal über die Steuerleitung 83' angesteuert.

In Fig. 2B ist eine im Wesentlichen ähnlich aufgebaute Druckluftversorgungsanlage 22 als Teil eines pneumatischen Systems 202 gezeigt. Im Unterschied zur Druckluftversorgungsanlage 21 weist die Druckluftversorgungsanlage 22 eine Magnetventilanordnung 80" mit einem Trennventil 63" und einem Entlüftungsventil 73" auf, wobei sowohl das Entlüftungsventil 73" als auch das Trennventil 63" als stromlos geschlossenes 2/2-Wegeventil gebildet ist.

Bei den in Fig. 1 bis Fig. 2B gezeigten Ausführungsformen einer Druckluftversorgungsanlage 11, 21, 22 ist das steuerbare Trennventil 63, 63', 63" in einem Durchströmungsbetrieb in einen offenen Zustand geschaltet. Ansonsten - vorliegend im stromlos gezeigten Zustand - befindet sich das Trennventil 63, 63', 63" in einem geschlossenen Zustand, so dass die pneumatische Verbindung in Form der Pneumatikhauptleitung 60 und der weiteren Pneumatikleitung 96 bidirektional und vollständig geschlossen ist. Mit anderen Worten ist die Pneumatikhauptleitung 60 von der weiteren Pneumatikleitung 96 zur Galerieleitung 95 vollständig getrennt. D.h. das Trennventil 63, 63', 63" trennt eine Galerieleitung 95 und somit insgesamt daran angeschlossene Bälge 91, den Speicher 92 oder sonstige Druckkammern von der Pneumatikhauptleitung 60. Diese gemäß dem Konzept der Erfindung vorgesehene vollständige Entkopplung der Druckluftversorgungsanlage 11, 21, 22 von der Pneumatikanlage 90 bei stromlos geschlossenem Trennventil 63, 63', 63" ermöglicht ein mit Vorteil versehenes Betreiben der Pneumatikanlage 90, ohne dass die Druckluftversorgungsanlage 11, 21, 22 davon beeinflusst wird. Aufgrund der durch das Trennventil 63, 63', 63" bewirkten Entkopplung - vorliegend in stromlos geschlossenem Zustand - werden insbesondere nachteilige Einflüsse auf die Druckluftversorgungsanlage 11, 21, 22 durch Betreiben der Pneumatikanlage 90 vermieden und ein Betreiben der Pneumatikanlage 90 ist unabhängig von einem Betrieb der Druckluftversorgungsanlage 11, 21, 22 möglich.

Aus diesem Grund ist bei geschlossenem Zustand des Trennventils 63, 63', 63" sowohl eine Belüftung der Pneumatikanlage 90 als auch eine Entlüftung der Pneumatikanlage 90 unterbunden - d.h. die pneumatische Verbindung aus Pneumatikhauptleitung 60 und weiterer Pneumatikleitung 96 ist für eine Druckluftströmung bidirektional und vollständig geschlossen. Vorliegend ist bei geschlossenem Zustand des Trennventils 63, 63', 63" die pneumatische Verbindung zwischen dem Lufttrockner 61 und der Galerieleitung 95 bidirektional und vollständig geschlossen. Dies führt unter anderem vorteilhaft dazu, dass das vergleichsweise große Volumen des Lufttrockners 61 für Zustände der Pneumatikanlage 90 unberücksichtigt bleiben kann und umgekehrt der Lufttrockners 61 bei Druckluftbewegungen in der Pneumatikanlage 90 nicht beeinflusst wird.

Fig. 3A und Fig. 3B zeigen weitere Abwandlungen einer Druckluftversorgungsanlage 23 bzw. 24 als Teil eines pneumatischen Systems 203 bzw. 204. Die Druckluftversorgungsanlagen 23, 24 sind - ansonsten ähnlich den Druckluftversorgungsanlagen 21, 22 - mit einer Magnetventilanordnung 80'" bzw. 80^{IV} gebildet, wobei ein Trennventil 63'" bzw. 63^{IV} als stromlos offenes 2/2-Wegeventil ausgeführt ist. Das derart stromlos offene 2/2-Wegeventil kann für die Magnetventilanordnung 80'" bzw. 80^{IV} in Kombination mit einem Entlüftungsventil 73'" bzw. 73^{IV} als stromlos geschlossenes bzw. stromlos offenes 2/2-Wegeventil realisiert sein. Im Falle stromlos offener Entlüftungsventile 73, 73', 73^{IV} ist ein Rückschlagventil 71 in der Entlüftungsleitung 70 vorgesehen, um die Druckluftversorgungsanlage 11, 21, 23 gegen die Umgebung zu schließen.

Fig. 4 zeigt eine weitere besonders bevorzugte Ausführungsform einer Druckluftversorgungsanlage 41 als Teil eines pneumatischen Systems 401 zur Versorgung einer Pneumatikanlage 90. Wiederum wird für identische oder ähnliche Teile oder Teile identischer oder ähnlicher Funktion gleiche Bezugszeichen verwendet. Im Folgenden werden insbesondere die Unterschiede zu den Druckluftversorgungsanlagen 11, 21, 22, 23, 24 erläutert und ansonsten auf die vorherigen Beschreibungen verwiesen. Die Druckluftversorgungsanlage 41 weist wiederum eine Pneumatikhauptleitung 60 und eine Entlüftungsleitung 70 auf. In der Pneumatikhauptleitung 60 ist ähnlich wie bei den zuvor erläuterten Ausführungsformen ein Lufttrockner 61, eine erste Drossel 62 und ein steuerbares Trennventil 163 angeordnet. Das steuerbare Trennventil 163 und die Drossel 62 bilden eine Reihenanordnung in der Pneumatikhauptleitung 60 derart, dass die pneumatische Verbindung aus der Pneumatikhauptleitung 60 und der Pneumatikleitung 96 für eine Druckluftströmung bidirektional und vollständig schließbar ist. Die Entlüftungsleitung 70 ist an die Pneumatikhauptleitung 60 an einem Druckluftzuführungsanschluss 52 angeschlossen und weist zwischen dem Druckluftzuführungsanschluss 52 und dem Entlüftungsanschluss 3 ein steuerbares Entlüftungsventil 173 auf. Im Unterschied zu den zuvor erläuterten Ausführungsformen ist das Trennventil 163 und das Entlüftungsventil 173 Teil einer Magnetventilanordnung 180 zur indirekten Schaltung eines Druckluftvolumens. Das Entlüftungsventil 173 ist dabei als indirekt geschaltetes Relaisventil Teil der Magnetventilanordnung 180, das durch ein Steuerventil 175 gesteuert wird. Das Steuerventil 175 ist vorliegend über eine von der Pneumatikhauptleitung 60 abgehende Zweigleitung 160 einem Gesamtdruck einer Druckströmung in der Pneumatikhauptleitung 60 ausgesetzt. Je nach Gestaltung der ersten Drossel 62 kann das Steuerventil 175 auch einem Teildruck der Pneumatikhauptleitung 60 ausgesetzt sein.

Insbesondere ein lediglich einem Teildruck ausgesetztes Steuerventil 175 zur Steuerung des Relaisventils 173 ermöglicht eine vergleichsweise schnelle Entlüftung der Druckluftversorgungsanlage 41, da ein Vorsteuerdruck vergleichsweise niedrig ist. Vorliegend ist konkret das Steuerventil 175 der Magnetventilanordnung 180 in einem stromlos geschlossenen Zustand. Je nach Ausbildung der Drossel 62 bedarf es einem mehr oder weniger großen Steuerstrom, um das Steuerventil 175 in den für die Zweigleitung 160 offenen Zustand zu schalten, um so das Relaisventil 173 in einen vorgesteuerten Zustand zu bringen. Es bedarf dann lediglich eines je nach Auslegung minimalen Betriebsdruckes, um das Relaisventil 173 in den offenen Zustand zu versetzen. Vorteilhaft bei einer schnell entlüftenden Magnetventilanordnung 180 ist, dass aufgrund der vergleichsweise geringen Nennweite der ersten Drossel 62 im Vergleich zu der größeren Nennweite der zweiten Drossel 72 lediglich ein kleiner Teildruck des Gesamtdrucks eines Druckluftvolumens in der Pneumatikhauptleitung 60 zur Steuerung des Relaisventils 173 über das Steuerventil 175 erforderlich ist. Gleichwohl wird das Hauptdruckvolumen über die Entlüftungsleitung 70 und die Drossel 72 sowie das Relaisventil 173 zum Entlüftungsanschluss 3 entlüftet. Ein Vorteil dieser schnell entlüftenden Magnetventilanordnung 180 bei der Druckluftversorgungsanlage 41 ist, dass nicht das gesamte Druckluftvolumen über ein einziges Magnetventil geschaltet werden muss, sondern bereits ein geringer Teildruck eines Teildruckluftvolumens über die Zweigleitung 160 an das Steuerventil 175 ausreichend ist. Diese Auslegung, in etwa als eine im Prinzip zwangsgesteuerte Ventilanordnung, ermöglicht eine Erhöhung des Betriebsdruckes auf ein vergleichbar hohes Druckniveau und gleichzeitig wird das Schalten hoher Druckluftvolumina über das Relaisventil 173 möglich gemacht. Das Relaisventil 173 kann mit vergleichsweise großer Nennweite ausgelegt werden. Darüber hinaus wird das Verhältnis der Nennweite der ersten Drossel 62 zur Nennweite der zweiten Drossel 72 so gebildet, dass dennoch eine wirksame Regeneration des Lufttrockners 61 bei einer Entlüftung der Druckluftversorgungsanlage 41 möglich ist.

Im stromlos geschlossenen Zustand ist das Steuerventil 175 über die weitere Zweigleitung 170 zum Entlüftungsanschluss 3 hin offen, wobei die weitere Zweigleitung 170 vor dem Entlüftungsanschluss 3 mit der Entlüftungsleitung 70 zusammengeführt wird.

Fig. 5 zeigt in Ansicht (A) eine besonders bevorzugte konstruktive Realisierung einer Druckluftversorgungsanlage 30 als Teil eines nicht näher dargestellten pneumatischen Systems 300. Ansicht (A) zeigt dazu in verallgemeinerter Form die Druckluftversorgungsanlage 30 mit einer Anzahl von Bereichen. Im ersten nicht näher dargestellten Bereich 31 ist ein Antrieb in Form des Motors M zum Antreiben des im zweiten Bereich 32 schematisch dargestellten Luftverdichters 51 angeordnet. Der Luftverdichter 51 weist dazu einen nicht näher bezeichneten in einem Verdichtungsraum hin und her bewegbaren Kolben auf, der über eine Welle und ein Pleuel vom Motor M angetrieben wird. Im Verdichtungsraum wird Luft über eine Luftzuführungs-Schnittstelle E0 der oben genannten Luftzuführung 0 zugeführt. Am Ausgang des Verdichtungsraums befindliche Druckluft wird über ein Ventil oder dergleichen Schnittstellenteil einer Druckluftzuführungs-Schnittstelle E1 für die oben genannte Druckluftzuführung 1 übergeben. Die Druckluftzuführungs-Schnittstelle E1 ist dem Druckluftzuführungsanschluss der zuvor erläuterten Ausführungsformen zugeordnet. Die Druckluft wird dann in einen dritten Bereich 33 der Druckluftversorgungsanlage abgegeben, welcher dritte Bereich 33 die Pneumatikhauptleitung 60 und Entlüftungsleitung 70 mit den genannten Einbauten, insbesondere die in Ansicht (A) schematisch dargestellte Magnetventilanordnung MVA realisiert. Die Magnetventilanordnung MVA kann grundsätzlich durch jede der zuvor oder noch im Folgenden erläuterten Magnetventilanordnungen 80, 80', 80", 80'", 80^{IV}, 180 gebildet sein. Insbesondere enthält der dritte Bereich 33 den Lufttrockner 61 mit einem Trockenbehälter 34 der mit Trockengranulat gefüllt und von einer Druckluftströmung der Pneumatikhauptleitung 60 - sei es als Entlüftungsströmung P oder Versorgungsströmung *P̅* - durchströmbar ist. Den Bereichen sind entsprechende Gehäuseteile A, B, C zugeordnet, die gegebenenfalls über eine oder mehrere Dichtungen D gegeneinander abgedichtet sind. Dem dritten Bereich 33 ist insbesondere ein Gehäuseteil C und ein dem Gehäuseteil C bodenseitig abschließender Deckel T zugeordnet. Der Deckel T bildet eine Druckluftversorgungs-Schnittstelle E2 für den oben genannten Druckluftanschluss 2 zur Pneumatikanlage 90 aus. Der Druckluftanschluss 2 führt, wie erläutert, zur weiteren Pneumatikleitung 96 und zur Galerieleitung 95. Die einem Trennventil der Magnetventilanordnung MVA zugeordnete erste Drossel 62 ist vorliegend mit definierter Nennweite als Öffnung im Trockenbehälter 34 und Deckel T gebildet. Der Deckel T bildet auch eine Entlüftungs-Schnittstelle E3 für den oben genannten Entlüftungsanschluss 3 aus. Schließlich bildet der Deckel T auch eine elektrische Steuer-Schnittstelle S zur Anbindung der oben genannten Steuerleitung 83, 83', 83", 83'", 83^{IV} an die Magnetventilanordnung MVA aus. Der Deckel T ist in seinen Maßen weitgehend kongruent mit einer Bodenkontur des Trockenbehälters 34 und kann praktisch passgenau auf den Trockenbehälter 34 aufgesetzt werden.

Das Gehäuseteil C ist durch eine Wandung W des mit Trockengranulat gefüllten Trockenbehälters 34 und dem Deckel T gebildet. Das Trockengranulat wird durch eine Feder F im Trockenbehälter 34 unter Druck zusammengehalten. Die Wandung W wiederum bildet bodenseitig des Trockenbehälters 34 eine symmetrisch, vorliegend mittig und parallel zu einer Achse des Trockenbehälters 34 angeordnete Einbuchtung G. In der Einbuchtung G ist ein Entlüftungsventil 73, 73', 73", 73'", 73^{IV}, 173 und ein Trennventil 63, 63', 63", 63'", 63^{IV}, 163 in Form der Magnetventilanordnung MVA symmetrisch zu der Achse des Trockenbehälters 34 untergebracht. Bodenseitig schließt der Deckel T die Einbuchtung G zusammen mit der darin befindlichen Magnetventilanordnung MVA in der genannten Weise dicht ab.

Durch die dargestellte U-förmige Anordnung der Bereiche 31, 32, 33 und der zugeordneten Gehäuseteile A, B, C wird eine bauraumsparende Druckluftversorgungsanlage 30 zur Verfügung gestellt, welche zudem horizontale Schnittstellen, nämlich als S, E0, E1, E2, E3 ermöglicht. Außerdem wird eine Gewichteinsparung dadurch erreicht, dass die Außenkontur des Trockenbehälters 34 des Lufttrockners 61 und der Deckel T als Teil der Gehäuseanordnung der Druckluftversorgungsanlage 30 genutzt wird. Vorliegend ist die Magnetventilanordnung MVA dreiseitig in der Einbuchtung G des Trockenbehälters 34 umfasst. Daraus ist ersichtlich, dass die Einbuchtung G frei von Trockenmittel ist. Eine mit durchgehenden Pfeilen dargestellte Entlüftungsströmung P aus der Galerieleitung 95 kann nach Bedarf über die Druckluftversorgungs-Schnittstelle E2 und die Entlüftungs-Schnittstelle E3 im Deckel T geführt werden. Der Lufttrockner 61 ist gemäß der symbolisch dargestellten Entlüftungsströmung P entgegengesetzt zu einer gestrichelt dargestellten Versorgungsströmung *P̅* zur Regeneration durchströmbar. Die mit gestrichelten Pfeilen dargestellte Versorgungsströmung *P̅* dient zur Versorgung der Pneumatikanlage 90 über die Pneumatikleitung 96 und die Galerieleitung 95 und erfolgt ausgehend von der Druckluftzuführungs-Schnittstelle E1 zur Druckluftversorgungs-Schnittstelle E2 des Druckluftanschlusses 2.

In Ansicht (B) der Fig. 5 ist eine Magnetventilanordnung MVA erkennbar, die - vorliegend zur Bildung einer Magnetventilanordnung 80' der Fig. 2A - in Form eines Doppelanker-Magnetventils gebildet ist. Beim Doppelanker-Magnetventil ist ein Primärventil I zur Bildung eines Trennventils 63' - in anderen Ausführungsformen auch eines zuvor erläuterten Trennventils 63, 63", 63'", 63'", 163 - realisiert. Ebenso ist bei der Magnetventilanordnung MVA in Form eines Doppelanker-Magnetventils ein Sekundärventil II zur Bildung eines Entlüftungsventils 73' - in anderen Ausführungsformen auch eines zuvor erläuterten Entlüftungsventils 73, 73", 73'", 73^{IV}, 173 - realisiert. Das Primärventil I hat einen ein erstes Dichtelement la tragenden Primäranker Ib, welcher über eine Ventilfeder Ic auf einem Ventilsitz Id des Primärventils I gehalten ist. Vorliegend ist das Primärventil I stromlos geschlossen und öffnet bei Bestromung der für Primärventil I und Sekundärventil II gemeinsamen Spulenkörpers III, welcher zur Bildung der für Primärventil I und Sekundärventil II gemeinsamen Spule - vorliegend der Spule 81' - dient. Ganz ähnlich weist das Sekundärventil II einen ein zweites Dichtelement IIa des Sekundärventils II tragenden Sekundäranker IIb auf, der ebenfalls als Kern einer für Primärventil I und Sekundärventil II gemeinsamen Spule im Spulenkörper III des Doppelanker-Magnetventils angeordnet ist. Durch die Ventilfeder IIc des Sekundärventils II ist vorliegend das zweite Dichtelement IIa vom Ventilsitz IId abgehoben, so dass es sich beim Sekundärventil II um ein stromlos offenes Wegeventil handelt. Insbesondere ist dieses ein 2/2-Wegeventil, wie das Entlüftungsventil 73' der Druckluftversorgungsanlage 21. Dadurch ist vorliegend eine pneumatische Verbindung in der Druckluftversorgungsleitung 70 offen zur Entlüftungs-Schnittstelle E3 des Entlüftungsanschlusses 3. Symbolisch ist wiederum die Entlüftungsströmung P als durchgehender Pfeil dargestellt.

In einer besonders vorteilhaften Weise kann gemäß dem Doppelanker-Magnetventil MVA vorliegend sowohl ein steuerbares Trennventil -hier als Primärventil I realisiert- und das steuerbare Entlüftungsventil -hier als Sekundärventil II realisiert- mit einem für beide gemeinsamen Steuersignal gesteuert werden, um einerseits das Primärventil I zu öffnen und andererseits das Sekundärventil II bei Bestromung zu schließen. Dieses ist anhand der Fig. 2A beispielhaft erläutert:
Wird komprimierte Luft einer Druckluftströmung benötigt - beispielsweise zum Heben eines Fahrzeugs durch Befüllen der Bälge 91 oder zum Füllen des Speichers 92 - werden das Primarventil I und das Sekundärventil II eingeschaltet, d.h. der Spulenkörper III mit einem Steuersignal in Form eines zum Schalten des Primär- und Sekundärventils I, II ausreichend hohen Steuerstroms bestromt. Dadurch schaltet das Primärventil I durch, d.h. es öffnet. Das Sekundärventil II geht von der geöffneten Stellung in eine Sperrstellung. Diese Funktionsstellung des Doppelanker-Magnetventils ermöglicht also ein Befüllen der Pneumatikanlage 90 aus der Druckluftzuführung 1. Soll andererseits die Pneumatikanlage 90 entlüftet werden, beispielsweise zum Absenken des Fahrzeugs, so wird vorliegend lediglich das Primärventil I eingeschaltet, d.h. das Primärventil I öffnet während das Sekundärventil in seiner in Ansicht Fig. 3B gezeigten geöffneten Stellung verbleibt. Ein entsprechender Steuerstrom wird ausreichend gering gewählt, so dass nur das Primärventil I schaltet. Die für die Belüftungs- bzw. Entlüftungsfunktion geeigneten Nennweiten der ersten Drossel 62 und der zweiten Drossel 72 - vorliegend bei einer Nennweite von jeweils 2,5 mm- wird durch Ausbildung der Nennweiten der Ventilsitze Id und IId des Primärventils I bzw. des Sekundärventils II ausgebildet.

Fig. 6 zeigt beispielhaft eine symbolische Darstellung einer Stromamplitude SA eines Steuerstroms für die Schaltung eines Doppelanker-Magnetventils MVA in der in Fig. 2A gezeigten Funktionsstellung eines steuerbaren Trennventils 63^{I} in Kombination mit einem stromlos offenen Entlüftungsventil 73^{I} zum Belüften und Entlüften der Pneumatikanlage 90. Das Trennventil 63^{I} nimmt dabei die Rolle des Primärventils I einer Magnetventilanordnung MVA ein und das Entlüftungsventil 73^{I} nimmt dabei die Rolle des Sekundärventils II der Magnetventilanordnung MVA ein. Die Stromamplitude SA ist vorliegend über einen fiktiven zeitlichen Verlauf t dargestellt und kann beispielsweise genutzt werden, um einen exakten Schaltpunkt des Primärventils I und/oder des Sekundärventils II einzulernen. Dies kann beispielsweise im Rahmen eines Diagnosejobs für eine Fahrzeugsteuerung ECU geschehen. Die Grafik der Fig. 6 zeigt eine geregelte Stromamplitude SA, die bei Überschreiten einer ersten Stromamplitude SA₁ dazu führt, dass -aufgrund der Einstellung einer Ventilfeder Ic des Primärventils I- das Primärventil I vom stromlos geschlossenen Zustand in einen geöffneten Schaltzustand übergeht, d.h. umgeschaltet wird. Bei Überschreitung einer zweiten vorliegend höheren Stromamplitude SA₂ schaltet zusätzlich das Sekundärventil II, d.h. es geht von dem stromlos offenen Zustand in einen Schaltzustand über, welcher dem geschlossenen Zustand des Sekundärventils II entspricht. Danach, bei Reduzierung der Steuerstromamplitude öffnet -unter Berücksichtigung einer gewissen Hysterese- bei Unterschreitung einer dritten Stromamplitude SA₃ das Sekundärventil, d.h. das Sekundärventil II geht nunmehr von dem bestromt geschlossenen Zustand in einen bei geringerer Bestromung auftretenden wiederum offenen Schaltzustand über. Bei Unterschreitung einer vierten, vorliegend niedrigeren Stromamplitude SA₄ geht schließlich das Primärventil I vom bestromt geöffneten Schaltzustand wieder in den stromlos geschlossenen Schaltzustand über.

Ein Einlernen der so beschriebenen Stromamplituden SA₁, SA₂, SA₃, SA₄ als relevante Schaltpunkte für einen Ein/Aus-Schaltzustandsübergang von Primärventil I bzw. Sekundärventil II kann bei Inbetriebnahme des Fahrzeugs oder auch nur nach einem Komponententausch erfolgen. In der Tat ist eine exakte Feststellung eines Bewegungszeitpunkts eines Ventilankers, nämlich eines Primärankers Ib bzw. Sekundärankers IIb nicht ohne Weiteres erkennbar. Durch Einlernen der Schaltpunkte ist jedoch ein exaktes Schalten des Primärventils I und des Sekundärventils II in der Doppelanker-Magnetventilanordnung MVA ermöglicht. Eine Erlernprozedur kann vorteilhaft als Diagnosejob in der Fahrzeugsteuerung in einem Modul der Fahrzeugsteuerung, d.h. in der ECU vorgehalten werden. Bis auf den umgekehrten pneumatischen Steuerzustand des stromlos geschlossenen Entlüftungsventils 73^{II} gilt der vorgenannte Verlauf auch für das Doppelanker-Magnetventil MVA der Fig. 2B. Ein möglicher Ablauf anhand von Fig. 2A kann folgender sein:
1. Bei zweiter Stromamplitude SA₂: Primärventil I und Sekundärventil II durchschalten und Bälge 91 befüllen.
2. Bei vierter Stromamplitude SA₄: Primärventil I und Sekundärventil II ausschalten und in den Stromloszustand versetzen.
3. Bei erster Stromamplitude SA₁: Primärventil I, d.h. Trennventil 63', einschalten und Druck messen in der Pneumatikhauptleitung 60 bzw. der Pneumatikleitung 96 oder der Galerieleitung 95.
4. Die Stromamplitude SA für Primärventil I und Sekundärventil II langsam erhöhen. Als Ergebnis ist festzustellen, dass bei beginnendem Druckabfall die erste Stromamplitude SA₁ vom Primärventil I erreicht ist, d.h. das Trennventil 63' ist geöffnet und öffnet die Pneumatikhauptleitung 60 zur Pneumatikleitung 96 bzw. Galerieleitung 95, was sich durch den beginnenden Druckabfall registrieren lässt.
5. Stromamplitude SA weiter erhöhen. Als Ergebnis wird bei nicht weiter abfallendem Druck die zweite Stromamplitude SA₂ des Sekundärventils II erreicht. Ein Stoppen des abfallenden Drucks ergibt sich als Ergebnis des Übergangs des Sekundärventils II vom offenen Schaltzustand in den geschlossenen Schaltzustand.
   Durch 4. und 5. werden die erste und zweite Stromamplituden SA₁, SA₂ der einschaltenden Schaltströme ermittelt.
6. In den weiteren Schritten wird die Stromamplitude SA wieder reduziert. Wird ein zunächst bleibender Druck und dann ein Druckrückgang beobachtet, ist die dritte Stromamplitude SA₃ zum Ausschalten des Sekundärventils II erreicht. Da das als Entlüftungsventil 73' gebildete Sekundärventil II öffnet, macht sich dies durch den Druckrückgang bemerkbar.
7. Die Stromamplitude SA wird weiter reduziert bis sich kein Rückgang mehr einstellt. Die nun vorliegende vierte Stromamplitude SA₄ entspricht dem Schaltstrom zum Ausschalten des Primärventils I, d.h. der Schaltstrom befindet sich unterhalb der Stromamplitude SA₄, bei welcher das Primärventil I, nämlich das Trennventil 63' schließt, also eine Druckluft in der Druckluftversorgungsanlage verbleibt.

Die auf diese Weise exakt ermittelten Stromamplituden SA₁, SA₂, SA₃, SA₄ für Schaltpunkte können für den weiteren optimierten Funktionsbetrieb des Primärventils I und Sekundärventils II, d.h. vorliegend eines Trennventils 63' und eines Entlüftungsventils 73' genutzt werden. In analoger Weise können Schaltpunkte für Trennventile 63, 63", 63'", 163^{IV}, 163 und Entlüftungsventile 73, 73", 73'", 73^{IV}, 173 ermittelt werden.

So entspricht z.B. die Funktion der Druckluftversorgungsanlage 41 der Fig. 4 hinsichtlich des Trennventils 163 und des Entlüftungsventils 173 analog der Funktionsweise der zuvor erläuterten Druckluftversorgungsanlagen 11, 21, 22, 23, 24. Insbesondere können die Stromamplituden für die Schaltströme im Hinblick auf ein Primärventil I - hier das Trennventil 163- und ein Sekundärventil II -hier die Steuer- und Relaisventilanordnung aus Steuerventil 175 und Relaisventil 173- analog zu der in Fig. 6 beschriebenen Verfahrensweise gewählt werden. Eine Anordnung der Magnetventilanordnung 180 anstelle der Magnetventilanordnung MVA der Fig. 5 in Ansicht (A) ist ebenfalls möglich, so dass eine vergleichsweise kompakte Realisierung auch der Magnetventilanordnung 180 in einer Druckluftversorgungsanlage 41 möglich ist.

Eine Abfolge von Stromamplituden zur Änderung der Schaltzustände des Trennventils 63'", 63^{IV} bzw. des Entlüftungsventils 73'" bzw. 73^{IV} kann ebenfalls analog der in Fig. 6 dargestellten Stromamplituden gewählt sein, wobei jedoch die Schaltzustände der Ventile 63'", 73'" bzw. 63^{IV}, 73^{IV} entsprechend anders sind. Beispielsweise wird bei einer Stromamplitude SA₁ das Trennventil 63'" bzw. 63^{IV} in der Rolle des Primärventils I geschlossen, so dass bei einer Bestromung mit einer Stromamplitude SA₁ die Druckluftversorgungsanlage 23 einen Schaltzustand einnimmt, welcher dem stromlosen Schaltzustand der Druckluftversorgungsanlage 21 entspricht. Entsprechend wird bei Bestromung der Magnetventilanordnung 80'" mit einer Stromamplitude SA₁ die Magnetventilanordnung 80'" einen Schaltzustand einnehmen, der dem stromlos-Schaltzustand der Magnetventilanordnung 80" entspricht.

Sowohl die Magnetventilanordnung 80'" als auch die Magnetventilanordnung 80^{IV} lässt sich anstelle der symbolisch dargestellten Magnetventilanordnung MVA in einer Druckluftversorgungsanlage 30 realisieren.

Fig. 7 verdeutlicht mit der Grafik eines vereinfachten zeitlichen Verlaufs eines PWM-Steuersignals 190 eine besonders bevorzugte Möglichkeit das steuerbare Trennventil 63, 63', 63", 63'", 63^{IV}, 163 der Fig. 1 bis Fig.4 in einem Durchströmungsbetrieb zwischen einem ersten und einem zweiten Steuerzustand eines Trennventils umzuschalten. Ein symbolisches Ersatzschaltbild ES ist vorliegend im Detail X_{ES} für das steuerbare Trennventil 63, 63', 63", 63'", 63^{IV}, 163 der Fig. 1 bis Fig.4 in der Pneumatikhauptleitung 60 gezeigt. Eine aus dem Umschaltvorgang resultierende Steuerzustandsänderung U ist im Detail X_{ES} durch einen gestrichelten Doppelpfeil veranschaulicht. Der erste Steuerzustand (i) ist dabei einem praktisch stromlos geschlossenen Zustand zugeordnet. Der zweite Steuerzustand (ii) ist dabei einem bestromt geöffneten Zustand zugeordnet. Ein ähnliches Steuersignal kann in einer hier nicht weiter beschriebenen, abgewandelten Ausführungsform auch dazu genutzt werden, ein Entlüftungsventil 73, 73', 73", 73'", 73^{IV}, 173 in einem Durchströmungsbetrieb zwischen einem ersten und einem zweiten Steuerzustand umzuschalten. Auch bei dem Entlüftungsventil 73, 73', 73", 73'", 73^{IV}, 173 wäre vorliegend ein erster Steuerzustand einem geschlossenen Zustand zugeordnet und ein zweiter Steuerzustand einem geöffneten Zustand zugeordnet. Insbesondere eignet sich das in Fig. 7 vorliegend dargestellte PWM-Steuersignal dazu, das steuerbare Trennventil 63, 63', 63", 63'", 63^{IV}, 163 und/oder das steuerbare Entlüftungsventil 73, 73', 73", 73'", 73^{IV}, 173 zwischen einem ersten (i) und zweiten (ii) Steuerzustand mit einer Taktrate einer Steuerzustandsänderung U hin und her umzuschalten. Dadurch kann eine effektive Nennweite N_{eff} des Trennventils 63, 63', 63", 63'", 63^{IV}, 163 in Reihenanordnung mit der Drossel 62 und/oder des Entlüftungsventils 73, 73', 73", 73'", 73^{IV}, 173 eingestellt werden.

Konkret ist in Fig. 7 dazu ein Spannungssignal 191 in Form von PWM-Spannungspulsen des PWM-Steuersignals 190 dargestellt. Ebenfalls ist ein aus dem Spannungssignal 191 resultierendes Stromsignal 192 dargestellt. Das Stromsignal 192 des PWM-Steuersignals entspricht vereinfacht einem Stromverlauf in einem Spulenkörper eines steuerbaren Trennventils 63, 63', 63", 63'", 63^{IV}, 163 und/oder eines steuerbaren Entlüftungsventils 73, 73', 73", 73'", 73^{IV}, 173, wenn an den Spulenkörper ein Spannungssignal 191 gemäß dem PWM-Steuersignal 190 angelegt wird.

Das PWM-Steuersignal 190 weist einen einem ersten Steuerzustand (i) zugeordneten Signalbereich 190.1 und einen einem zweiten Steuerzustand (ii) zugeordneten Signalbereich 190.2 auf. Die Signalbereiche 190.1, 190.2 wechseln mit vorgegebener Taktrate und bewirken so eine Steuerzustandsänderung U zwischen einem ersten Steuerzustand und einem zweiten Steuerzustand (i), (ii). Die Taktrate kann grundsätzlich zwischen 4 Hz und 20 Hz eingestellt werden - Fig. 7 zeigt eine Taktrate von 10 Hz. Insbesondere wird somit das steuerbare Trennventil 63, 63', 63", 63'", 63^{IV}, 163 und/oder das steuerbare Entlüftungsventil 73, 73', 73", 73'", 73^{IV}, 173 mit der Taktrate von 10 Hz zwischen einem dem geschlossenen Zustand zugeordneten ersten Steuerzustand (i) (im Signalbereich 190.1) und einem dem geöffneten Zustand zugeordneten zweiten Steuerzustand (ii) (im Signalbereich 190.2) im Rahmen der Steuerzustandsänderung U hin und her geschaltet. Das steuerbare Trennventil und/oder Entlüftungsventil befindet sich während der Steuerzustandsänderung U, d.h. für die Signalbereiche 190.1, 190.2 im Durchströmungsbetrieb. Mit anderen Worten wird im ersten Signalbereich 190.1 ein steuerbares Ventil -vorliegend das steuerbare Trennventil 63, 63', 63", 63'", 63^{IV}, 163 und/oder das steuerbare Entlüftungsventil 73, 73', 73", 73'", 73^{IV}, 173-zum geschlossenen Zustand geführt, ohne dass der geschlossene Zustand erreicht würde; diese Tendenz entspricht dem ersten Steuerzustand (i). Entsprechend wird im zweiten Signalbereich 190.2 ein steuerbares Ventil -vorliegend das steuerbare Trennventil 63, 63', 63", 63'", 63^{IV}, 163 und/oder das steuerbare Entlüftungsventil 73, 73', 73", 73'", 73^{IV}, 173- zum geöffneten Zustand geführt, ohne dass der geöffnete Zustand erreicht würde; diese Tendenz entspricht dem zweiten Steuerzustand (ii). Selbstverständlich kann in einer abgewandelten Ausführungsform während eines Signalbereichs 190.1 auch der geschlossene Zustand des steuerbaren Ventils erreicht werden ohne vom Konzept der vorliegenden Ausführungsform abzuweichen. Selbstverständlich kann in einer abgewandelten Ausführungsform während eines Signalbereichs 190.2 auch der geöffnete Zustand des steuerbaren Ventils erreicht werden ohne vom Konzept der vorliegenden Ausführungsform abzuweichen. Vorliegend bevorzugt, entspricht jedoch die Taktrate der Steuerzustandsänderung U, also die Taktrate eines Wechsels zwischen den Signalbereichen 190.1 und 190.2 etwa 10 Hz. Grundsätzlich kann eine solche Taktrate zwischen 4 und 20 Hz gewählt werden. Im Grunde führt dies dazu, dass sich -bei höherer Taktrate- ein steuerbares Ventil zwischen einem vollständig geschlossenen Zustand und einem vollständig geöffneten Zustand hin und her bewegt, ohne dass der vollständig geöffnete oder vollständig geschlossene Zustand endgültig erreicht werden müsste, gleichwohl -bei geringerer Taktrate- erreicht werden könnte.

Konkret stellt sich im Rahmen der Steuerzustandsänderung U die getaktete Umschaltung eines steuerbaren Trennventils 63, 63', 63", 63'", 63^{IV}, 163 und/oder steuerbaren Entlüftungsventils 73, 73', 73", 73'", 73^{IV}, 173 im Durchströmungsbetrieb wie folgt dar. In dem ersten Signalbereich 190.1 sind die Pulsweiten t₃ im Vergleich zu den Pausenweiten t₄ eines Spannungssignals 191 in Form von PWM-Spannungspulsen derart gewählt, dass ein damit verursachtes Stromsignal 192 kleiner oder gleich einem Rückstellstrom I_{R} ist. Anders formuliert ist ein Puls/Pausen-Verhältnis t₃/t₄ derart gering gewählt, dass ein Stromsignal 192 während der Pulszeit t₃ nur bis zu einem Wert kleiner oder gleich dem Rückstellstrom I_{R} ansteigen kann und während der Pausenzeit t₄ wieder in ausreichendem Maß abfällt. Im Signalbereich 190.1 wird somit ein steuerbares Ventil nicht geschaltet und verbleibt in einem dem "stromlos" geschlossenen Zustand zugeordneten Steuerzustand (i). Beispielsweise entspricht dieser Zustand dem in Fig. 1, Fig. 2A, Fig. 2B, Fig. 4 dargestellten stromlos geschlossenen Zustand des Trennventils 63, 63', 63", 63'", 63^{IV}, 163.

In einem zweiten Signalbereich 190.2 ist ein Puls/Pausen-Verhältnis t₁/t₂ des Spannungssignals 191 in Form der PWM-Spannungspulse größer gewählt als im ersten Signalbereich 190.1. Mit anderen Worten sind die Pulszeiten t₁ nunmehr so gewählt, dass ein Stromsignal 192 ausreichend Zeit hat, bis zu einem Schaltstrom I_{S} anzusteigen und während der Pausenzeiten t₂ jedenfalls nicht unterhalb des Rückstellstroms IR abfällt. Dies führt dazu, dass bei Erreichen des Schaltstroms I_{S} oder Übersteigen des Schaltstroms I_{S} des Stromsignals 192 ein steuerbares Ventil durchgeschaltet wird - im Falle der Fig. 1, Fig. 2A, Fig. 2B, Fig. 4 ein Trennventil 63, 63', 63", 63'", 63^{IV}, 163, also von einem stromlos geschlossenen Zustand in einen bestromten geöffneten Zustand überführt wird.

Wie aus dem in Fig. 7 dargestellten Verlauf des PWM-Steuersignals 190 erkennbar, ist das zeitliche Andauern eines zweiten Signalbereichs 190.2 derart beschränkt, dass ein vollständig geöffneter Zustand im zugeordneten Steuerzustand (ii) des steuerbaren Ventils nicht gänzlich erreicht wird. Vielmehr sinkt ein Stromsignal 192 zu einem Zeitpunkt t_{R} unterhalb des Rückstellstroms I_{R}. Vor Erreichen des vollständig geöffneten Zustands des steuerbaren Ventils -nämlich des Trennventils 63, 63', 63", 63'", 63^{IV}, 163- geht gemäß der in Fig. 7 dargestellten Taktrate einer Steuerzustandsänderung von 10 Hz des PWM-Steuersignals 190 wieder in einen ersten Signalbereich 190.1 über, in welchem das steuerbare Ventil in einen dem stromlos geschlossenen Zustand zugeordneten Steuerzustand (i) übergehen kann.

Das Andauern des ersten Signalbereichs 190.1 ist wiederum zeitlich gemäß der dargestellten Taktrate derart begrenzt, dass vor endgültigem Erreichen des vollständig geschlossenen Zustands des steuerbaren Ventils sich wiederum ein zweiter Signalbereich 190.2 anschließt. Dies führt dazu, dass mit Erreichen des Schaltstroms I_{S} zu einem Zeitpunkt t_{S} das steuerbare Ventil wieder in einen geöffneten Zustand überführt wird.

Das derart mit vorgegebener Taktrate von 10 Hz dynamische Hin- und Herführen des steuerbaren Ventils -also des steuerbaren Trennventils 63, 63', 63", 63'", 63^{IV}, 163 und/oder des steuerbaren Entlüftungsventils 73, 73', 73", 73'", 73^{IV}, 173- zwischen einem dem geschlossenen Zustand zugeordneten ersten Steuerzustand (i) und dem geöffneten Zustand zugeordneten zweiten Steuerzustand (ii) führt dazu, dass im Durchströmungsbetrieb des steuerbaren Ventils eine Durchflussmenge des steuerbaren Ventils regelbar und/oder steuerbar ist über eine so einstellbare effektive Nennweite N_{eff} des steuerbaren Ventils. Durch das Hin- und Herschalten zwischen einem geschlossenen Zustand wird praktisch die tatsächliche Nennweite des steuerbaren Ventils im vollständig geöffneten Zustand auf die effektive Nennweite N_{eff} verringert, die während der Steuerzustandsänderung U, d.h.im Zustand des dynamischen Hin- und Herschaltens, eingenommen wird. Insbesondere führt die ständige Steuerzustandsänderung U des steuerbaren Ventils zwischen einem ersten und zweiten Steuerzustand (i), (ii) mit einer Taktrate einer Steuerzustandsänderung U zwischen einem ersten Signalbereich 190.1 und einem zweiten Signalbereich 190.2 dazu, dass eine effektive Nennweite N_{eff} einer Reihenanordnung aus Drosselmittel 62 und steuerbarem Trennventil 63, 63', 63", 63'", 63^{IV}, 163 unterhalb einer tatsächlichen Nennweite des Drosselmittels 62 im vollständig geöffneten Zustand des Trennventil 63, 63', 63", 63'", 63^{IV}, 163 liegt. Auf diese Weise wird praktisch eine regelbare bzw. steuerbare effektive Nennweite N_{eff} realisiert. Dies schließt jedoch nicht aus, dass im Grenzfall die Reihenanordnung aus Drosselmittel 62 und steuerbarem Trennventil 63, 63', 63", 63'", 63^{IV}, 163 auch vollständig geschlossen oder auch vollständig geöffnet sein kann.

Im Rahmen einer konkreten Ausführung kann beispielsweise die Nennweite einer Pneumatikhauptleitung 60 in einem Bereich oberhalb von 4 mm liegen. Die tatsächliche Nennweite eines Drosselmittels 62 kann beispielsweise zwischen 1 und 3 mm liegen, vorliegend bei beispielsweise 2,5 mm. Mittels einer oben beschriebenen Steuerzustandsänderung U eines steuerbaren Trennventils 63, 63', 63", 63'", 63^{IV}, 163 mit vorgegebener Taktrate lässt sich so die effektive Nennweite N_{eff} der Reihenanordnung aus Drosselmittel 62 und steuerbarem Trennventil 63, 63', 63", 63'", 63^{IV}, 163 unterhalb der tatsächlichen Nennweite des Drosselmittels von 2,5 mm einstellen. Beispielsweise lässt sich die effektive Nennweite N_{eff} der Reihenanordnung in einem Bereich zwischen 0,6 mm und 2,5 mm -je nach gewählter Taktrate- durch getaktete Steuerzustandsänderung U des steuerbaren Trennventils 63, 63', 63", 63'", 63^{IV}, 163 einstellen.

Um andererseits im regelmäßig auftretenden Grenzfall das steuerbare Trennventil 63, 63', 63", 63'", 63^{IV}, 163 in einen vollständig geschlossenen Zustand zu überführen, kann ein Spannungssignal 191 für einen längeren Zeitraum als den ersten Signalbereich 190.1 vorgesehen sein, so dass in dem Falle ein Stromsignal 192 für einen längeren Zeitpunkt unterhalb des Rückstellstroms I_{R} verbleibt. Es kann auch das Trennventil 63, 63', 63", 63'", 63^{IV}, 163 vollständig stromlos gestellt werden. In dem Falle geht das steuerbare Trennventil 63, 63', 63", 63'", 63^{IV}, 163 vollständig in den geschlossenen Zustand über und kann die Pneumatikhauptleitung 60 bidirektional und vollständig verschließen. Umgekehrt kann in einem beispielshaft dargestellten dritten Signalbereich 190.3 ein Spannungssignal 191 mit einem Puls/Pausen-Verhältnis t₅/t₆ derart gewählt werden, dass ein Stromsignal 192 entsprechend der Pulsrate des PWM-Steuersignals bis zu einem Haltestrom I_{H} ansteigen kann. Ein Haltestrom I_{H} ist ausreichend, um ein steuerbares Trennventil 63, 63', 63", 63'", 63^{IV}, 163 und/oder ein steuerbares Entlüftungsventil 73, 73', 73", 73'", 73^{IV}, 173 in einem bestromt geöffneten Zustand zu halten. Eine Pulsrate des PWM-Steuersignals selbst kann -unabhängig vom Puls/Pausen-Verhältnis t₁:t₂ oder t₃:t₄ oder t₅:t₆ - im Bereich von etwa 10 kHz gewählt werden.

Im Ergebnis zeigt Fig. 7 den Verlauf eines PWM-Steuersignals 190, bei dem zunächst durch getaktete Steuerzustandsänderung U -d.h. Wechsel der ersten und zweiten Signalbereiche 190.1 und 190.2- ein Durchströmungsbetrieb des steuerbaren Ventils durch teilweises Öffnen und Schließen des steuerbaren Ventils beeinflusst wird. So ist eine Durchflussmenge, über die Taktrate der Steuerzustandsänderung U und die damit bewirkte oben beschriebene effektive Nennweite N_{eff} des Ventils, regelbar und/oder steuerbar ist. In dem Bereich der getakteten Steuerzustandsänderung U zwischen dem ersten und zweiten Steuerzustand (i), (ii) -der vorliegend über die sich abwechselnden ersten und zweiten Signalbereiche 190.1 und 190.2 andauert- befindet sich die Reihenanordnung aus Drosselmittel 62 und steuerbarem Trennventil 63, 63', 63", 63'", 63^{IV}, 163 im Durchströmungsbetrieb, bei dem eine effektive Nennweite N_{eff} der Reihenanordnung aus Drosselmittel 62 und steuerbarem Trennventil 63, 63', 63", 63'", 63^{IV}, 163 unterhalb einer tatsächlichen Nennweite des Drosselmittels 62 liegt. In einem weiteren, dem dritten Signalbereich 190.3, zugeordneten Bereich ist die Reihenanordnung vollständig geöffnet und die Nennweite derselben entspricht der statischen Nennweite des Drosselmittels 62 bei vorliegend 2,5 mm. In einem nicht dargestellten Bereich, in dem ein Stromsignal 192 unterhalb eines Rückstellstroms I_{R} liegt (ähnlich dem ersten Signalbereich 190.1) geht das steuerbare Trennventil 63, 63', 63", 63'", 63^{IV}, 163 in einen vollständig geschlossenen Zustand über -wie er in Fig. 1, Fig. 2A, Fig. 2B, Fig. 4 dargestellt ist- und schließt die pneumatische Verbindung aus Pneumatikhauptleitung 60 und Pneumatikleitung 96 bidirektional und vollständig.

Zusammenfassend ist vorliegend also ein erster Steuerzustand (i) einem ersten PWM-Steuersignal im ersten Signalbereich 190.1 zugeordnet und ein zweiter Steuerzustand (ii) einem zweiten PWM-Steuersignal im zweiten Signalbereich 190.2 zugeordnet. Die Taktrate der Steuerzustandsänderung U kann in Abhängigkeit unterschiedlicher Steuerparameter geändert werden. Auch kann eine zeitliche Länge der ersten und zweiten Signalbereiche 190.1 und 190.2 in Abhängigkeit verschiedenster Steuerparameter geändert werden. Dazu kann der Abstand der Zeitpunkte t_{S} und t_{R} je nach Bedarf in Abhängigkeit eines Steuerparameters geändert werden. Beispielsweise kann eine Gesamtöffnungszeit eines steuerbaren Ventils im Durchströmungsbetrieb nach Bedarf eingestellt werden. Dazu kann beispielsweise das Andauern eines ersten Signalbereichs 190.1 verlängert oder verkürzt werden, d.h. der Abstand der Zeitpunkte t_{R} und t_{S} verlängert oder verkürzt werden. Eine Schaltgeschwindigkeit kann durch Änderung der Taktrate, d.h. Wechsel der ersten und zweiten Signalbereiche 190.1, 190.2 beeinflusst werden. Grundsätzlich können zur Einstellung der effektiven Nennweite der Reihenanordnung eine Vielzahl von Steuerparametern genutzt werden, die beispielsweise durch eine Fahrzeugsteuerung oder einen Zustand einer Pneumatikanlage 90 oder den Zustand eine Druckluftversorgungsanlage 11, 21, 30, 41 geliefert werden können. So kann beispielsweise die Schaltgeschwindigkeit eines steuerbaren Ventils und/oder eine Gesamtöffnungszeit im Durchströmungsbetrieb bzw. eine Gesamtschließzeit im Trennbetrieb eingestellt werden. Auch kann ein erster Steuerzustand und/oder ein zweiter Steuerzustand variabel eingestellt werden. Mit anderen Worten muss eine Steuerzustandsänderung, wie sie anhand von Fig. 7 beschrieben ist, nicht notwendigerweise zwischen immer gleichen ersten und zweiten Signalbereichen 190.1, 190.2 erfolgen. Wie oben bereits angedeutet, kann ein tatsächlicher Schaltzustand eines steuerbaren Ventils durch Veränderung der ersten und zweiten Steuerzustände - d.h. über die ersten und zweiten Signalbereiche 190.1, 190.2 - eingestellt werden, insbesondere kontinuierlich eingestellt werden. Der tatsächliche Steuerzustand eines steuerbaren Ventils kann praktisch eine beliebige Position eines Ankers des Ventils zwischen einer vollständig geschlossenen und einer vollständig offenen Stellung kontinuierlich vorgeben.

Diese und andere Einstellmöglichkeiten einer Steuerzustandsänderung U können beispielsweise in Abhängigkeit einer Ablasscharakteristik einer Pneumatikanlage 90 und/oder einer Druckluftversorgungsanlage 11, 21, 22, 23, 24, 30, 41 erfolgen. Auch kann ein Galeriedruck in einer Pneumatikanlage als Steuerparameter dienen. Ein Galeriedruck kann beispielsweise durch einen Drucksensor 98, wie er in Fig. 1 an einer Galerieleitung 95 über die Sensor-Zweigleitung 99.3 angeschlossen ist, gemessen werden. Auch kann eine aktuelle Entlüftungssituation maßgeblich für eine zweckmäßige Einstellung der effektiven Nennweite N_{eff} der Reihenanordnung aus Drosselmittel 62 und steuerbarem Trennventil 63, 63', 63", 63'", 63^{IV}, 163 sein. Darüber hinaus kann ein tatsächlicher Abstand zwischen Soll- und Istwert einer Entlüftungs- oder Belüftungssituation als Steuerparameter für eine Steuerzustandsänderung genutzt werden. Ist beispielsweise der Abstand eines Galeriedrucks der Pneumatikanlage zwischen Soll- und Istwert vergleichsweise groß, kann dies dazu benutzt werden, einen vergleichsweise schnellen Entlüftungsvorgang einzuleiten. Dazu kann beispielsweise die Taktrate einer Steuerzustandsänderung herabgesetzt werden oder das Andauern eines zweiten Signalbereichs 190.2 verlängert werden. Ebenso kann ein Lufttrockner-Regenerationsbedarf maßgeblich für die Einstellung der effektiven Nennweite N_{eff} sein. Andererseits können Akustikwerte einer Druckluftversorgungsanlage 11, 21, 22, 23, 24, 30, 41 und/oder einer Pneumatikanlage 90 genutzt werden, um einen Entlüftungsvorgang vergleichsweise geräuscharm zu gestalten und insbesondere einen Entlüftungsknall zu verhindern. Dazu kann es im Rahmen einer besonders bevorzugten Ausbildung vorgegeben sein, dass für bestimmte Druckwerte des Galeriedrucks ein vollständig geöffneter Zustand des steuerbaren Trennventils 63, 63', 63", 63'", 63^{IV}, 163 zu vermeiden ist und eine Taktrate einer Steuerzustandsänderung U -d.h. ein Wechsel zwischen den Signalbereichen 190.1 und 190.2- mit einer Mindesttaktrate zu erfolgen hat. Eine Mindesttaktrate kann ab einem gewissen Druckniveau des Galeriedrucks gewährleisten, dass ein Druckpuls in ausreichend kurze Druckpulse mit ausreichend kleiner Amplitude zerteilt wird, die nicht zu einem Entlüftungsknall führen können.

Im Rahmen einer besonders bevorzugten Ausführungsform eines Steuerverfahrens für eine Druckluftversorgungsanlage ist vorgesehen, dass für das steuerbare Trennventil 63, 63', 63", 63'", 63^{IV}, 163 und/oder das steuerbare Entlüftungsventil 73, 73', 73", 73'", 73^{IV}, 173 im Durchströmungsbetrieb eine Durchflussmenge geregelt und/oder gesteuert wird, wobei wenigstens eines der Ventile zwischen einem ersten und zweiten Steuerzustand mit einer Taktrate einer Steuerzustandsänderung hin und her umgeschaltet wird. In Abhängigkeit eines Druckwertes der Pneumatikanlage 90, insbesondere eines Galeriedrucks, kann das Steuerverfahren vorsehen, dass im Durchströmungsbetrieb für die Taktrate eine druckwertabhängige Mindesttaktrate vorgesehen ist, um einen Entlüftungsknall zu vermeiden.

Im Ergebnis bietet die im Durchströmungsbetrieb mit einer getakteten Steuerzustandsänderung hin und her schaltbaren Magnetventilanordnung 80, 80', 80", 80'", 80^{IV}, 180 einer Druckluftversorgungsanlage 11, 21, 22, 23, 24, 30, 41 die Möglichkeit eine effektive Nennweite N_{eff} einer Reihenanordnung aus Drosselmittel 62 und steuerbarem Trennventil 63, 63', 63", 63'", 63^{IV}, 163 regelbar und/oder steuerbar auszugestalten. Damit lässt sich im Durchströmungsbetrieb nicht nur eine Durchflussmenge regeln und/oder steuern, sondern darüber hinaus unvorteilhafte Situationen, wie ein Entlüftungsknall vermeiden. Auch lassen sich Entlüftungs-, Belüftungs- oder sonstige Betriebszustände der Druckluftversorgungsanlage 11, 21, 22, 23, 24, 30, 41 in Abhängigkeit von den vorgenannten Steuerparametern einstellen.

Eine Kombination von stromlos offenen Entlüftungsventil 73, 73' und stromlos geschlossenen Trennventil 63' hat sich als besonders vorteilhaft erwiesen - ähnlich wie in Fig. 1 und Fig. 2A dargestellt. Für den Fall kann ein Trennventil 63, 63' für einen Entlüftungsvorgang zunächst allein geschaltet werden und dazu in den Durchströmungsbetrieb überführt werden. Für eine Kombination von stromlos geschlossenen Entlüftungsventil 73" und stromlos geschlossenen Trennventil 63" hat es sich als vorteilhaft erwiesen für einen Entlüftungsvorgang zunächst das Entlüftungsventil vor den offenen Zustand zu schalten und erst danach oder zeitgleich das Trennventil in einen Durchströmungsbetrieb zu überführen. Ein Durchströmungsbetrieb kann wie anhand von Fig. 7 beispielhaft erläutert werden.

Anschließend an Fig. 4 ist in den Fig. 8 bis Fig. 10 für die in Fig. 4 gezeigte Druckluftversorgungsanlage 41 und Pneumatikanlage 90 in Form einer Luftfederanlage gezeigt, wie ausgewählte Funktionsstellungen der Druckluftversorgungsanlage 41 und der Pneumatikanlage 90 für unterschiedliche Betriebsstellungen des pneumatischen Systems 401 genutzt werden können. Auf die grundsätzliche Beschreibung der Fig. 4 wird hier Bezug genommen.

Fig. 8 zeigt zunächst in Ansichten (A), (B), (C) unterschiedliche Betriebsstellungen, welche zum Befüllen der Pneumatikanlage 90 dienen. In allen Betriebsstellungen ist das steuerbare Trennventil 163, d.h. das Primärventil der Magnetventilanordnung 180, in einer bestromt geöffneten Stellung. D.h. die Pneumatikhauptleitung 60 und damit die Druckluftversorgungsanlage 41 ist zur weiteren Pneumatikleitung 96 und Galerieleitung 95 hin geöffnet. Insbesondere ist das steuerbare Trennventil 163 beim Befüllen vorteilhaft in einem vollständig geöffneten Zustand, da es in dem meisten Situationen keinen Grund gibt, die effektive Nennweite der Reihenanordnung aus Drosselmittel 62 und steuerbarem Trennventil unterhalb der tatsächlichen Nennweite des Drosselmittels 62 zu verringern.

In Ansicht (A) der Fig. 8 ist eine Funktionsstellung des pneumatischen Systems 401 gezeigt, bei welchem der Speicher 92 der Pneumatikanlage 90 befüllt wird. Das dem Speicher 92 vorgeordnete Speicher-Magnetventil 94 ist dazu bestromt und somit geöffnet. Der Speicher 92 kann mit der aus der Druckluftzuführung 1 geförderten Druckluft der Druckluftversorgungsanlage 41 über die Pneumatikhauptleitung 60 die weitere Pneumatikleitung 96 und die Galerieleitung 95 mit Druckluft befüllt werden. Vorliegend wird der Speicher 92 bis zu einem Speicherdruck in einem Bereich zwischen 13,5 und 18 bar befüllt.

Ansicht (B) der Fig. 8 zeigt eine Betriebsstellung des pneumatischen Systems 401, bei welcher die Bälge 91 mit Druckluft befüllt werden. Die Funktionsstellung der Druckluftversorgungsanlage 41 entspricht dabei der Ansicht (A) der Fig. 8, so dass hier auf die Beschreibung der Funktionsstellung der Druckluftversorgungsanlage 41 in Ansicht (A) der Fig. 8 Bezug genommen wird. Im Unterschied zur Betriebsstellung des pneumatischen Systems 401 und einem Befüllen des Speichers 92 ist vorliegend das vorgeordnete Speicher-Magnetventil 94 vor dem Speicher 92 in einer stromlos geschlossenen Stellung. Dagegen sind die vorgeordneten Balg-Magnetventile 93 vor den Bälgen 91 bestromt geöffnet, so dass die aus der Druckzuführung 1 zur Verfügung gestellte Druckluft über die Pneumatikhauptleitung 60 die weitere Pneumatikleitung 96 in die Galerieleitung 95 und in die Bälge 91 gefördert werden kann. Ein Befüllen der Bälge 91 erfolgt vorliegend bis zu einem Balgdruck im Bereich von 5 bis 12 bar.

Ansicht (C) der Fig. 8 zeigt eine Betriebsstellung des pneumatischen Systems 401, bei welcher die Bälge 91 der Pneumatikanlage 90 sowohl aus dem Speicher 92 als auch aus der Druckluftzuführung 1 mit Druckluft befüllt werden. Dazu sind sowohl die den Bälgen 91 vorgeordneten Balg-Magnetventile 93 als auch das dem Speicher 92 vorgeordnete Speicher-Magnetventil 94 bestromt und somit geöffnet. In der in Ansicht (C) der Fig. 8 gezeigten Betriebsstellung des pneumatischen Systems 401 entspricht der Förderdruck der Druckluftzuführung 1 wenigstens dem Speicherdruck des Speichers 92, so dass die Bälge 91 gleichermaßen aus dem Speicher 92 als auch der Galerieleitung 95 befüllt werden können.

Fig. 9 zeigt in Ansichten (A) bis (D) weitere Betriebsstellungen eines pneumatischen Systems 401, die zum Querschalten von Bälgen 91 bzw. für Messvorgänge in der Pneumatikanlage 90 geeignet sind. In allen Fällen der Betriebsstellungen des pneumatischen Systems 401 der Ansichten (A) bis (D) der Fig. 9 ist die Druckluftversorgungsanlage 41 in der in Ansicht (A) gezeigten Funktionsstellung. Dabei ist das als Primärventil der Magnetventilanordnung 180 dienende steuerbare Trennventil 163 in einem vollständig geschlossenen Zustand, d.h. stromlos geschlossen. Im Ergebnis ist die Pneumatikhauptleitung 60 für eine Druckluftströmung zur weiteren Pneumatikleitung 96 bzw. zur Galerieleitung 95 bidirektional und vollständig geschlossen. Die Druckluftversorgungsanlage 41 ist somit von der Pneumatikanlage 90 entkoppelt. Dies hat mit Vorteil versehen zur Folge, dass die in Ansichten (A) bis (D) dargestellten Betriebsstellungen des pneumatischen Systems 401 in der Pneumatikanlage 90 ausgeführt werden können, ohne die Druckluftversorgungsanlage 41, insbesondere den Lufttrockner derselben, zu beeinträchtigen oder gar negativ zu beeinträchtigen.

Die in Ansicht (A) dargestellte Betriebsstellung des pneumatischen Systems 401 dient dazu, die Bälge 91 der Pneumatikanlage 90 aus dem Speicher 92 derselben zu befüllen. Dazu sind alle dem Speicher und den Bälgen 91 vorgeordneten Balg-Magnetventile 93 und das Speicher-Magnetventil 94 bestromt, d.h. in einem geöffneten Zustand. In dem Speicher 92 mit Speicherdruck zwischen etwa 13,5 bis 18 bar gespeicherte Druckluft kann somit vom höheren Druckluftniveau in die Bälge 91 über die Galerieleitung 95 fließen, so dass ein Balgdruck in einem Bereich zwischen 5 bis 12 bar erreichbar ist.

Die in Ansicht (B) der Fig. 9 dargestellte Betriebsstellung des pneumatischen Systems 401 erfolgt mit der gleichen Funktionsstellung der Druckluftversorgungsanlage 41, wie sie in Ansicht (A) der Fig. 9 dargestellt ist. Die in Ansicht (B) dargestellte Betriebsstellung dient dazu, einen Balgdruck - hier bei einem obersten Balg 91 - mittels einem an der Galerieleitung 95 über eine Sensor-Zweigleitung 99.3 angeschlossenen Drucksensor 98 zu messen. Entsprechend ist ein dem Speicher 92 vorgeordnetes Speicher-Magnetventil 94 in einem stromlos geschlossenen Zustand während an dem zu messenden Balg 91 vorgeordnetes Balg-Magnetventil 93 - hier das oberste - bestromt und somit in einem geöffneten Zustand sind. Wenn alle Balg-Magnetventile 93 geöffnet sind, kann im Unterschied zur vorgenannten Einzelmessung auch der Balgdruck aller Bälge 91 gleichzeitig gemessen werden. Der Balgdruck aller Bälge 91 kann sich somit über die geöffneten Balg-Magnetventile 93 ausgleichen und der so gemittelte Druck wird über den Drucksensor 98 gemessen.

Die in Ansicht (C) dargestellte Betriebsstellung des pneumatischen Systems 401 nutzt wie alle weiteren beschriebenen Betriebsstellungen wiederum eine Funktionsstellung der Druckluftversorgungsanlage 401 der Ansicht (A) der Fig. 9. Die Betriebsstellung des pneumatischen Systems 401 der Ansicht (C) der Fig. 9 dient dazu, den Speicherdruck über den Drucksensor 98 der Sensor-Zweigleitung 99.3 und der Galerieleitung 95 zu messen. Entsprechend sind die den Bälgen 91 vorgeordneten Balg-Magnetventile 93 in einem stromlos geschlossenen Zustand, während das dem Speicher 92 vorgeordnete Speicher-Magnetventil 94 in einem geöffneten und bestromten Zustand ist.

Die in Ansicht (D) dargestellte Betriebsstellung eines pneumatischen Systems 401 sieht eine leichte Abwandlung der Pneumatikanlage 90 vor. Vorliegend ist ein Drucksensor 98 im Unterschied zu den Darstellungen A bis C und E nicht über eine Sensor-Zweigleitung 99.3 an der Galerieleitung 95 angeschlossen. Vielmehr ist ein Drucksensor 98 in Ansicht (D) der Fig. 9 direkt am Speicher 92 angeschlossen. Somit kann ein Speicherdruck im Speicher 92 direkt gemessen werden und zwar sowohl bei geöffnetem Speicher-Magnetventil 94 als auch bei geschlossenem Speicher-Magnetventil 94.

Fig. 10 zeigt zwei weitere Betriebsstellungen eines pneumatischen Systems 401 in Ansichten (A) und (B), welche einem Entlüftungsvorgang dienen. Dabei ist sowohl das steuerbare Trennventil 163 der Druckluftversorgungsanlage 41 als auch das Entlüftungsventil 173 im Durchströmungsbetrieb. Vorliegend ist die Druckluftversorgungsanlage 41 in einer Funktionsstellung, bei welcher das als Sekundärventil dienende Steuerventil 175 der Magnetventilanordnung 180 als auch das als Relaisventil gebildete Entlüftungsventil 173 der Magnetventilanordnung 180 in einem geöffneten Zustand. Insbesondere ist dazu das Relaisventil in einem vollständig geöffneten Zustand, so dass dieses mit maximaler Nennweite für einen vergleichsweise schnellen Entlüftungsvorgang zur Verfügung steht. Dagegen ist das als Primärventil dienende steuerbare Trennventil 163 der Magnetventilanordnung 180 in einem Durchströmungsbetrieb, bei welchem eine Durchflussmenge einer Druckluftströmung regelbar und/oder steuerbar ist. Vorliegend wird dies durch eine anhand der Fig. 7 beschriebene getaktete Steuerzustandsänderung des steuerbaren Trennventils 163 erreicht. D.h. die in Ansicht (A) der Fig. 10 dargestellte geöffnete Stellung des steuerbaren Trennventils 163 ist so gewählt, dass zum einen eine vergleichsweise schnelle Entlüftung erfolgen kann und zum anderen eine Akustik der Druckluftversorgungsanlage 41 auf einem vergleichsweise geringen Niveau gehalten wird. Insbesondere erfolgt eine Einstellung einer Taktrate einer Steuerzustandsänderung zwischen einem ersten und zweiten Steuerzustand, wie er anhand von Fig. 7 beschrieben wurde. Eine Mindesttaktrate ist derart gewählt, dass ein Druckpuls aus der Galerieleitung 95 bzw. der weiteren Pneumatikleitung 96 derart zerkleinert wird, dass ein Entlüftungsknall sicher vermieden ist.

Letzteres gilt insbesondere für die in Ansicht (A) der Fig. 10 dargestellte Betriebsstellung des pneumatischen Systems 401, welches dem Entlüften der Pneumatikanlage 90 und der Druckluftversorgungsanlage 41 aus dem Speicher 92 dient. Da der Speicherdruck in einem Bereich zwischen 13,5 und 18 bar vergleichsweise hoch ist, neigt diese Betriebsstellung des pneumatischen Systems 401 dazu, einen Entlüftungsknall auszulösen. Vorliegend wird dies insbesondere dadurch vermieden, dass jedenfalls für eine erste Phase der Entlüftung eine getaktete Steuerzustandsänderung mit ausreichend hoher Taktrate gemäß Fig. 7 für das steuerbare Trennventil 163 gewählt wird, wobei das Entlüftungsventil 173 und das dem Speicher 92 vorgeordnete Speicher-Magnetventil 94 in einem vollständig geöffneten Zustand sind. Die den Bälgen 91 vorgeordneten Balg-Magnetventile 93 sind in einem stromlos geschlossenen Zustand.

In einer zweiten Phase der Entlüftung - beispielsweise wenn der Druck im Speicher 92 auf ein ausreichend geringes Maß gesunken ist - kann das steuerbare Trennventil 163 in einen vollständig geöffneten Zustand überführt werden, wie er beispielsweise durch den Signalbereich 190.3 der Fig. 7 dargestellt ist. Beim Signalbereich 190.3 erreicht das Stromsignal jedenfalls einen Haltestrom, der ausreichend ist, das steuerbare Trennventil 163 in einer vollständig geöffneten Stellung zu halten. Ein verbleibender Restdruck im Speicher 92 kann also über die Reihenanordnung von Drosselmittel 62 und steuerbarem Trennventil 163 mit maximaler Nennweite des Drosselmittels 62 entlüftet werden.

Ansicht (B) der Fig. 10 zeigt das pneumatische System 401 in einer Betriebsstellung, die dazu dient, die Bälge 91 der Pneumatikanlage 90 in Form der Luftfederanlage zu entlüften. Dazu werden die Bälge je nach Bedarf einzeln oder in Gruppen geöffnet, wobei ein gleichzeitiges Öffnen aller Bälge 91 jedoch vermieden ist. Da der Balgdruck in einem Bereich zwischen 5 und 12 bar vergleichsweise niedrig gegenüber einem Speicherdruck von 13,5 bis 18 bar ist, besteht eine verringerte Gefahr eines Entlüftungsknalls. Somit kann je nach Auslegung des pneumatischen Systems 401 grundsätzlich das steuerbare Trennventil 163 in einen vollständig geöffneten Zustand für den Entlüftungsvorgang gebracht werden und dort verbleiben. Das kann beispielsweise durch andauerndes Ansteuern des steuerbaren Trennventils 163 mit einem Steuersignal, wie es dem Signalbereich 190.2 und 190.3 des PWM-Steuersignals 190 der Fig. 7 entspricht, geschehen. Beispielsweise kann das steuerbare Trennventil 163 durch Ansteuern mit einem Steuersignal des Signalbereichs 190.2 des PWM-Steuersignals 190 in einen geöffneten Zustand geschaltet werden, d.h. ein Steuerstrom 192 erreicht den Schaltstrom I_{S} und sinkt danach auf einen Haltestrom I_{H}, so dass das steuerbare Trennventil 163 in einen vollständig geöffneten Zustand geschaltet wird und dort verbleibt. Alternativ kann auch ein Vorgehen, ähnlich wie anhand der Ansicht (A) der Fig. 10 beschrieben, gewählt werden. Jedoch kann für eine dort beschriebene erste Phase einer Entlüftung, d.h. für eine anfängliche hohe Druckspitze beim Entlüften der Bälge 91, eine gegebenenfalls geringere Taktrate einer Steuerzustandsänderung gewählt werden im Vergleich zu einer vergleichsweise hohen Taktrate einer Steuerzustandsänderung beim Entlüften des Speichers 92.

### BEZUGSZEICHENLISTE (Bestandteil der Beschreibung)

- 0: Luftzuführung
- 1: Druckluftzuführung
- 2: Druckluftanschluss
- 3: Entlüftungsanschluss
- 11, 21, 22, 23, 24, 30, 41: Druckluftversorgungsanlage
- 31: erster Bereich
- 32: zweiter Bereich
- 33: dritter Bereich
- 34: Trockenbehälter
- 51: Luftverdichter
- 52: Druckluftzuführungsanschluss
- 60: Pneumatikhauptleitung
- 61: Lufttrockner
- 62: erste Drossel / Drosselmittel
- 63, 63', 63", 63'", 63^{IV}, 163: steuerbares Trennventil

- 70: Entlüftungsleitung
- 71: Rückschlagventil
- 72: zweite Drossel
- 73, 73', 73", 73'", 73^{IV}, 173: Entlüftungsventil
- 74: Filter
- 80, 80', 80", 80'", 80^{IV}, 180: Magnetventilanordnung
- 81, 81', 81": erste Spule
- 82: zweite Spule
- 83, 83', 83", 83'", 83^{IV}, 183, 84.1, 84.2: Steuerleitung
- 90: Pneumatikanlage
- 91: Balg
- 92: Speicher
- 93: Balg-Magnetventil vor Balg 91
- 94: Speicher-Magnetventil vor Speicher 92
- 95: Galerieleitung
- 96: Pneumatikleitung
- 97: Ventilblock
- 98: Drucksensor
- 99: Sensorzweigleitung
- 99.1: Balgzweigleitung
- 99.2: Speicherzweigleitung
- 101, 201, 202, 203, 204, 300, 401: pneumatisches System
- 160: von der Pneumatikhauptleitung abgehende Zweigleitung
- 170: weitere Zweigleitung
- 175: Steuerventil
- 190: PWM-Steuersignal
- 190.1: erster Signalbereich
- 190.2: zweiter Signalbereich
- 190.3: dritter Signalbereich
- 191: Spannungssignal
- 192: Stromsignal
- A, B, C: Gehäuseteil
- D: Dichtung
- E0: Luftzuführungs-Schnittstelle
- E1: Druckluftzuführungs-Schnittstelle
- E2: Druckluftversorgungs-Schnittstelle
- E3: Entlüftungs-Schnittstelle
- F: Feder
- G: Einbuchtung
- I_{H}: Haltestrom
- I_{R}: Rückstellstrom
- I_{S}: Schaltstrom
- M: Motor
- MVA: Magnetventilanordnung
- P: Entlüftungsströmung
- P: Versorgungsströmung
- S: Steuer-Schnittstelle
- SA: Stromamplitude
- SA₁: erste Stromamplitude, Schaltpunkt
- SA₂: zweite Stromamplitude, Schaltpunkt
- SA₃: dritte Stromamplitude, Schaltpunkt
- SA₄: vierte Stromamplitude, Schaltpunkt
- T: Deckel
- W: Wandung
- t: zeitlicher Verlauf
- t₁: Pulsweite
- t₂: Pausenweite
- t₃: Pulsweite
- t₄: Pausenweite
- t₅: Pulsweite
- t₆: Pausenweite
- t_{R}: Zeitpunkt
- t_{S}: Zeitpunkt
- X_{ES}: Detail
- ES: Ersatzschaltbild
- U: Steuerzustandsänderung
- X, Y, Z: Anschluss
- I: Primärventil
- II: Sekundärventil
- Ia: erstes Dichtelement
- IIa: zweites Dichtelement
- Ib: Primäranker
- IIb: Sekundäranker
- Ic, IIc: Ventilfeder
- Id, IId: Ventilsitz
- III: Spulenkörper
- (i), (ii): erster, zweiter Steuerzustand
- N_{eff}: effektive Nennweite

## Patentansprüche

1. Druckluftversorgungsanlage (11, 21, 22, 23, 24, 30, 41) zum Betreiben einer Pneumatikanlage (90), insbesondere einer Luftfederanlage eines Fahrzeugs, aufweisend:
- eine Druckluftzuführung (1),
- eine Pneumatikhauptleitung (60) zwischen der Druckluftzuführung (1) und der Pneumatikanlage (90), die einen Lufttrockner (61), ein Drosselmittel (62) und wenigstens ein steuerbares Trennventil (63, 63', 63", 63'", 63^{IV}, 163) aufweist,
- eine mit der Pneumatikhauptleitung (60) und einem Entlüftungsanschluss (3) zur Umgebung pneumatisch verbundene Entlüftungsleitung (70) mit wenigstens einem steuerbaren Entlüftungsventil (73 ,73', 73", 73'", 73^{IV}, 173), wobei das wenigstens eine steuerbare Trennventil (63, 63', 63", 63'", 63^{IV}, 163) in einem Trennbetrieb in einen geschlossenen Zustand schaltbar ist und mit dem Drosselmittel (62) eine Reihenanordnung in der Pneumatikhauptleitung (60) bildet, derart dass die Pneumatikhauptleitung (60) im Trennbetrieb bidirektional und vollständig geschlossen ist, **dadurch gekennzeichnet, dass** das wenigstens eine steuerbare Trennventil (63, 63', 63", 63'", 63^{IV}, 163) und das wenigstens eine steuerbare Entlüftungsventil (73, 73', 73", 73'", 73^{IV}, 173) eingerichtet sind, mit einem für beide gemeinsamen Steuersignal (190) gesteuert zu werden, und das steuerbare Trennventil (63, 63', 63", 63'", 63^{IV}, 163) mit einer ersten Spule (81) und das steuerbare Entlüftungsventil (73 ,73', 73", 73'", 73^{IV}, 173) mit einer zweiten Spule (82) gebildet ist, wobei die erste Spule und die zweite Spule mit einem einzigen beiden Spulen (81', 81") gemeinsamen Spulenkörper (III) gebildet sind.

2. Druckluftversorgungsanlage nach Anspruch 1,
**dadurch gekennzeichnet, dass** die Pneumatikhauptleitung (60) bis zu einem Druckluftanschluss (2) zur Pneumatikanlage (90) verläuft, wobei in einen geschlossenen Zustand des steuerbaren Trennventils (63, 63', 63", 63'", 63^{IV}, 163) die Pneumatikhauptleitung (60) zwischen dem Lufttrockner (61) und dem Druckluftanschluss (2) bidirektional und vollständig geschlossen ist.

3. Druckluftversorgungsanlage nach einem der Ansprüche 1 bis 2,
**dadurch gekennzeichnet, dass** in einem Durchströmungsbetrieb, in einen offenen Zustand schaltbar ist, in dem das wenigstens eine steuerbare Trennventil (63, 63', 63", 63'", 63^{IV}, 163) und/oder das wenigstens eine Entlüftungsventil (73, 73', 73", 73'", 73^{IV}, 173) zwischen einem ersten (i), einem geschlossenen Zustand zugeordneten Steuerzustand und einem zweiten (ii), einem geöffneten Zustand zugeordneten Steuerzustand mittels dem Steuersignal (190) umschaltbar ist.

4. Druckluftversorgungsanlage nach einem der Ansprüche 1 bis 3,
**dadurch gekennzeichnet, dass** für das wenigstens eine steuerbare Trennventil (63, 63', 63", 63'", 63^{IV}, 163) und/oder das wenigstens eine steuerbare Entlüftungsventil (73, 73', 73", 73'", 73^{IV}, 173) im Durchströmungsbetrieb mittels dem Steuersignal (190) eine Durchflussmenge regelbar und/oder steuerbar ist.

5. Druckluftversorgungsanlage nach einem der Ansprüche 1 bis 4,
**dadurch gekennzeichnet, dass** ein erster Steuerzustand (i) und/oder ein zweiter Steuerzustand (ii) des wenigstens einen Trennventils (63, 63', 63", 63'", 63^{IV}, 163) und/oder des wenigstens einen Entlüftungsventils (73, 73', 73", 73'", 73^{IV}, 173) mittels dem Steuersignal (190) variabel einstellbar ist, insbesondere ein Schaltzustand zwischen dem ersten und zweiten Steuerzustand (i, ii) kontinuierlich einstellbar ist.

6. Druckluftversorgungsanlage nach einem der Ansprüche 1 bis 5,
**dadurch gekennzeichnet, dass** in einem Durchströmungsbetrieb das wenigstens eine steuerbare Trennventil (63, 63', 63", 63'", 63^{IV}, 163) und/oder das wenigstens einen Entlüftungsventil (73, 73', 73", 73'", 73^{IV}, 173) mittels dem Steuersignal (190) zwischen einem ersten und zweiten Steuerzustand (i, ii) mit einer Taktrate einer Steuerzustandsänderung (U) hin und her umschaltbar ist.

7. Druckluftversorgungsanlage nach Anspruch 6,
**dadurch gekennzeichnet, dass** eine Taktrate einer Steuerzustandsänderung (U) zwischen 4 und 20 Hz liegt.

8. Druckluftversorgungsanlage nach einem der Ansprüche 1 bis 7,
**dadurch gekennzeichnet, dass** das Steuersignal (190) ein PWM-Steuersignal ist, insbesondere in Form eines Strom- und/oder Spannungssignals.

9. Druckluftversorgungsanlage nach einem der Ansprüche 1 bis 8,
**dadurch gekennzeichnet, dass** das wenigstens eine steuerbare Trennventil (63, 63', 63", 63'", 63^{IV}, 163) im Durchströmungsbetrieb mittels des Steuersignals (190) derart zwischen einem ersten und einem zweiten Steuerzustand (i, ii) umschaltbar ist, dass eine effektive Nennweite (N_{eff}) der Reihenanordnung aus Drosselmittel (62) und steuerbarem Trennventil (63, 63', 63", 63'", 63^{IV}, 163), unterhalb einer tatsächlichen Nennweite des Drosselmittels (62) liegt.

10. Druckluftversorgungsanlage nach einem der Ansprüche 1 bis 9,
**dadurch gekennzeichnet, dass** das wenigstens eine Entlüftungsventil (73, 73', 73", 73'", 73^{IV}, 173) als direkt geschaltetes Ventil, Teil einer Magnetventilanordnung (80, 80', 80", 80'", 80^{IV}, 180) zur direkten Schaltung eines Druckluftvolumens ist.

11. Druckluftversorgungsanlage nach einem der Ansprüche 1 bis 9,
**dadurch gekennzeichnet, dass** das wenigstens eine Entlüftungsventil (73, 73', 73", 73'", 73^{IV}, 173), als indirekt geschaltetes Relaisventil, Teil einer Magnetventilanordnung (MVA, 80, 80', 80", 80'", 80^{IV}, 180) zur indirekten Schaltung eines Druckluftvolumens ausgebildet ist, wobei die Magnetventilanordnung (80, 80', 80", 80'", 80^{IV}, 180) ein einem Druck der Pneumatikhauptleitung (60), insbesondere Gesamtdruck, ausgesetztes Steuerventil (175) zur Steuerung des Relaisventils aufweist.

12. Pneumatisches System (101, 201, 202, 203, 204, 300, 401), mit der Druckluftversorgungsanlage (11, 21, 22, 23, 24, 30, 41) nach einem der vorhergehenden Ansprüche und einer Pneumatikanlage (90), insbesondere einer Luftfederanlage eines Fahrzeugs.

13. Verfahren zum Betreiben einer Pneumatikanlage (90), insbesondere eine Luftfederanlage eines Fahrzeugs, mit einer Druckluftversorgungsanlage (11, 21, 22, 23, 24, 30, 41) nach einem der Ansprüche 1 bis 11, bei dem das wenigstens eine steuerbare Trennventil (63, 63', 63", 63'", 63^{IV}, 163) in einem Trennbetrieb in einen geschlossenen Zustand geschaltet wird und mit dem Drosselmittel (62) eine Reihenanordnung in der Pneumatikhauptleitung (60) bildet, derart dass diese im Trennbetrieb bidirektional und vollständig geschlossen ist, und
das wenigstens eine steuerbare Trennventil (63, 63', 63", 63'", 63^{IV}, 163) mit einer ersten Spule (81) und das wenigstens eine steuerbare Entlüftungsventil (73, 73', 73", 73'", 73^{IV}, 173) mit einer zweiten Spule (82) gebildet ist, wobei die erste Spule und die zweite Spule mit einem einzigen beiden Spulen (81', 81") gemeinsamen Spulenkörper (III) gebildet mit einem für beide gemeinsamen Steuersignal (190) gesteuert werden.

14. Verfahren nach Anspruch 13 **dadurch gekennzeichnet, dass** das wenigstens eine steuerbare Trennventil (63, 63', 63", 63'", 63^{IV}, 163) und/oder das wenigstens eine Entlüftungsventil (73, 73', 73", 73'", 73^{IV}, 173) zwischen einem ersten und zweiten Steuerzustand (i, ii) mit einer Taktrate einer Steuerzustandsänderung (U) hin und her umgeschaltet werden.

15. Verfahren nach Anspruch 14 **dadurch gekennzeichnet, dass** das wenigstens eine steuerbare Trennventil (63, 63', 63", 63'", 63^{IV}, 163) und/oder das wenigstens eine Entlüftungsventil (73, 73', 73", 73'", 73^{IV}, 173) mittels einem Steuersignal, vorzugsweise mittels einem PWM-Steuersignal, insbesondere in Form eines Strom- und/oder Spannungssignals, mit einer Taktrate einer Steuerzustandsänderung (U) zwischen 4Hz und 20 Hz zwischen einem ersten und einem zweiten Steuerzustand (i, ii) hin und her umgeschaltet werden.

16. Verfahren nach einem der Ansprüche 13 bis 15 **dadurch gekennzeichnet, dass** das steuerbare Trennventil (63, 63', 63", 63'", 63^{IV}, 163) in dem Trennbetrieb stromlos geschlossen ist.

17. Verfahren nach Anspruch 16, **dadurch gekennzeichnet, dass** das steuerbare Trennventil (63, 63', 63", 63'", 63^{IV}, 163) und das Entlüftungsventil (73, 73', 73", 73'", 73^{IV}, 173) in dem Trennbetrieb stromlos geschlossen sind und das Entlüftungsventil (73, 73', 73", 73'", 73^{IV}, 173) in einen Durchströmungsbetrieb übergeht erst nachdem das Trennventil (63, 63', 63", 63'", 63^{IV}, 163) in den offenen Zustand geschaltet ist.

## Claims

1. Compressed air supply installation (11, 21, 22, 23, 24, 30, 41) for operating a pneumatic installation (90), in particular an air spring installation on a vehicle, having:
- a compressed air feed (1),
- a main pneumatic line (60) between the compressed air feed (1) and the pneumatic installation (90), which has an air drier (61), a restricting means (62) and at least one controllable isolating valve (63, 63', 63", 63'", 63^{IV}, 163),
- a vent line (70), which is connected pneumatically to the main pneumatic line (60) and to a vent port (3) leading to the environment and has at least one controllable vent valve (73, 73', 73", 73'", 73^{IV}, 173),
wherein,
in an isolating mode, the at least one controllable isolating valve (63, 63', 63", 63'", 63^{IV}, 163) can be switched into a closed state and forms a series arrangement in the main pneumatic line (60) with the restricting means (62), such that the main pneumatic line (60) is bidirectionally and completely closed in the isolating mode, **characterized in that** the at least one controllable isolating valve (63, 63', 63", 63'", 63^{IV}, 163) and the at least one controllable vent valve (73, 73', 73", 73'", 73^{IV}, 173) are set up to be controlled by means of a control signal (190) common to both, and the controllable isolating valve (63, 63', 63", 63'", 63^{IV}, 163) is formed with a first coil (81) and the controllable vent valve (73, 73', 73", 73'", 73^{IV}, 173) is formed with a second coil (82), wherein the first coil and the second coil are formed with a single coil former (III) common to both coils (81', 81").

2. Compressed air supply installation according to Claim 1,
**characterized in that** the main pneumatic line (60) runs as far as a compressed air port (2) leading to the pneumatic installation (90), wherein, in a closed state of the controllable isolating valve (63, 63', 63", 63'", 63^{IV}, 163), the main pneumatic line (60) between the air drier (61) and the compressed air port (2) is bidirectionally and completely closed.

3. Compressed air supply installation according to one of Claims 1 to 2,
**characterized in that**, in a through-flow mode, there can be a switch to an open state, in which the at least one controllable isolating valve (63, 63', 63", 63'", 63^{IV}, 163) and/or the at least one vent valve (73, 73', 73", 73'", 73^{IV}, 173) can be switched over by means of the control signal (190) between a first (i) control state, which is assigned to a closed state, and a second (ii) control state, which is assigned to an open state.

4. Compressed air supply installation according to one of Claims 1 to 3,
**characterized in that** a through-flow quantity for the at least one controllable isolating valve (63, 63', 63", 63'", 63^{IV}, 163) and/or the at least one controllable vent valve (73, 73', 73", 73'", 73^{IV}, 173) can be subjected to closed-loop and/or open-loop control in the through-flow mode by means of the control signal (190).

5. Compressed air supply installation according to one of Claims 1 to 4,
**characterized in that** a first control state (i) and/or a second control state (ii) of the at least one isolating valve (63, 63', 63", 63''', 63^{IV}, 163) and/or of the at least one vent valve (73, 73', 73", 73''', 73^{IV}, 173) can be adjusted in a variable manner by means of the control signal (190), in particular an operating state can be adjusted continuously between the first and the second control state (i, ii).

6. Compressed air supply installation according to one of Claims 1 to 5,
**characterized in that**, in a through-flow mode, the at least one controllable isolating valve (63, 63', 63", 63''', 63^{IV}, 163) and/or the at least one vent valve (73, 73', 73", 73''', 73^{IV}, 173) can be switched over backward and forward by means of the control signal (190) between a first and a second control state (i, ii) at a clock rate of a control state change (U).

7. Compressed air supply installation according to Claim 6,
**characterized in that** a clock rate of a control state change (U) is between 4 and 20 Hz.

8. Compressed air supply installation according to one of Claims 1 to 7,
**characterized in that** the control signal (190) is a PWM control signal, in particular in the form of a current and/or voltage signal.

9. Compressed air supply installation according to one of Claims 1 to 8,
**characterized in that**, in the through-flow mode, the at least one controllable isolating valve (63, 63', 63", 63"', 63^{IV}, 163) can be switched over by means of the control signal (190) between a first and a second control state (i, ii) in such a way that an effective nominal width (N_{eff}) of the series arrangement comprising the restricting means (62) and the controllable isolating valve (63, 63', 63'', 63"', 63^{IV}, 163) is below an actual nominal width of the restricting means (62).

10. Compressed air supply installation according to one of Claims 1 to 9,
**characterized in that** the at least one vent valve (73, 73', 73", 73"', 73^{IV}, 173), as a directly switched valve, is part of a solenoid valve arrangement (80, 80', 80", 80"', 80^{IV}, 180) for directly switching a compressed air volume.

11. Compressed air supply installation according to one of Claims 1 to 9,
**characterized in that** the at least one vent valve (73, 73', 73", 73"', 73^{IV}, 173), as an indirectly switched relay valve, is designed as part of a solenoid valve arrangement (MVA, 80, 80', 80", 80"', 80^{IV}, 180) for indirectly switching a compressed air volume, wherein the solenoid valve arrangement (80, 80', 80", 80'", 80^{IV}, 180) has a control valve (175) for controlling the relay valve, which control valve is subjected to a pressure of the main pneumatic line (60), in particular the total pressure.

12. Pneumatic system (101, 201, 202, 203, 204, 300, 401) having the compressed air supply installation (11, 21, 22, 23, 24, 30, 41) according to one of the preceding claims and a pneumatic installation (90), in particular an air spring installation on a vehicle.

13. Method for operating a pneumatic installation (90), in particular an air spring installation on a vehicle, having a compressed air supply installation (11, 21, 22, 23, 24, 30, 41) according to one of Claims 1 to 11, in which, in an isolating mode, the at least one controllable isolating valve (63, 63', 63", 63"', 63^{IV}, 163) is switched into a closed state and forms a series arrangement in the main pneumatic line (60) with the restricting means (62), such that said main pneumatic line is bidirectionally and completely closed in the isolating mode, and
the at least one controllable isolating valve (63, 63', 63", 63"', 63^{IV}, 163) is formed with a first coil (81) and the at least one controllable vent valve (73, 73', 73", 73"', 73^{IV}, 173) is formed with a second coil (82), wherein the first coil and the second coil, formed with a single coil former (III) common to both coils (81', 81"), are controlled by means of a control signal (190) common to both.

14. Method according to Claim 13, **characterized in that** the at least one controllable isolating valve (63, 63', 63", 63"', 63^{IV}, 163) and/or the at least one vent valve (73, 73', 73", 73"', 73^{IV}, 173) are switched over backward and forward between a first and a second control state (i, ii) at a clock rate of a control state change (U).

15. Method according to Claim 14, **characterized in that** the at least one controllable isolating valve (63, 63', 63", 63"', 63^{IV}, 163) and/or the at least one vent valve (73, 73', 73", 73"', 73^{IV}, 173) are switched over backward and forward between a first and a second control state (i, ii) by means of a control signal, preferably by means of a PWM control signal, in particular in the form of a current and/or voltage signal, at a clock rate of a control state change (U) of between 4 Hz and 20 Hz.

16. Method according to one of Claims 13 to 15, **characterized in that**, in the isolating mode, the controllable isolating valve (63, 63', 63", 63"', 63^{IV}, 163) is closed when deenergized.

17. Method according to Claim 16, **characterized in that**, in the isolating mode, the controllable isolating valve (63, 63', 63", 63"', 63^{IV}, 163) and the vent valve (73, 73', 73", 73"', 73^{IV}, 173) are closed when deenergized, and the vent valve (73, 73', 73", 73"', 73^{IV}, 173) makes a transition to a through-flow mode only after the isolating valve (63, 63', 63", 63"', 63^{IV}, 163) has been switched to the open state.

## Revendications

1. Système d'alimentation en air comprimé (11, 21, 22, 23, 24, 30, 41) pour faire fonctionner un système pneumatique (90), en particulier un système de suspension pneumatique d'un véhicule, comprenant :
- une alimentation en air comprimé (1),
- une conduite pneumatique principale (60) entre l'alimentation en air comprimé (1) et le système pneumatique (90), qui comporte un sécheur d'air (61), un moyen d'étranglement (62) et au moins une soupape de séparation commandable (63, 63', 63", 63'", 63^{IV}, 163),
- une conduite de purge (70) reliée pneumatiquement à la conduite pneumatique principale (60) et à un raccord de purge à l'environnement (3), comportant au moins une soupape de purge commandable (73, 73', 73", 73"', 73^{IV}, 173),
dans lequel l'au moins une soupape de séparation (63, 63', 63", 63'", 63^{IV}, 163) peut être amenée à basculer dans un état fermé en mode de séparation et forme un montage en série avec le moyen d'étranglement (62) dans la conduite pneumatique principale (60), de telle sorte que la conduite pneumatique principale (60) soit complètement fermée de manière bidirectionnelle en mode de séparation,
**caractérisé en ce que** l'au moins une soupape de séparation commandable (63, 63', 63", 63'", 63^{IV}, 163) et l'au moins une soupape de purge commandable (73, 73', 73", 73"', 73^{IV}, 173) sont conçues pour être commandées par un signal de commande (190) commun à l'une et à l'autre et la soupape de séparation commandable (63, 63', 63", 63'", 63^{IV}, 163) est munie d'une première bobine (81) et la soupape de purge commandable (73, 73', 73", 73"', 73^{IV}, 173) est munie d'une deuxième bobine (82), la première bobine et la deuxième bobine étant munies d'un corps de bobine (III) commun aux deux bobines (81', 81").

2. Système d'alimentation en air comprimé selon la revendication 1, **caractérisé en ce que** la conduite pneumatique principale (60) s'étend jusqu'à un raccord d'air comprimé (2) raccordé au système pneumatique (90), dans lequel, dans un état fermé de la soupape de séparation commandable (63, 63', 63", 63'", 63^{IV}, 163), la conduite pneumatique principale (60) est complètement fermée de manière bidirectionnelle entre le sécheur d'air (61) et le raccord d'air comprimé (2).

3. Système d'alimentation en air comprimé selon l'une des revendications 1 à 2, **caractérisé en ce qu'**en mode passant, il peut être amené à basculer dans un état ouvert dans lequel l'au moins une soupape de séparation commandable (63, 63', 63", 63'", 63^{IV}, 163) et/ou l'au moins une soupape de purge (73, 73', 73", 73"', 73^{IV}, 173) peut être amenée à basculer au moyen du signal de commande (190) entre un premier (i) état de commande associé à un état fermé et un second (ii) état de commande associé à un état ouvert.

4. Système d'alimentation en air comprimé selon l'une des revendications 1 à 3, **caractérisé en ce qu'**en mode passant, un débit peut être régulé et/ou commandé au moyen du signal de commande (190) pour l'au moins une soupape de séparation commandable (63, 63', 63", 63'", 63^{IV}, 163) et/ou l'au moins une soupape de purge commandable (73, 73', 73", 73"', 73^{IV}, 173).

5. Système d'alimentation en air comprimé selon l'une des revendications 1 à 4, **caractérisé en ce qu'**un premier état de commande (i) et/ou un second état de commande (ii) de l'au moins une soupape de séparation (63, 63', 63", 63'", 63^{IV}, 163) et/ou de l'au moins une soupape de purge (73, 73', 73", 73"', 73^{IV}, 173) peut être réglé de manière variable au moyen du signal de commande (190), en particulier, **en ce qu'**un état de basculement entre le premier et le second état de commande (i, ii) peut être réglé en continu.

6. Système d'alimentation en air comprimé selon l'une des revendications 1 à 5, **caractérisé en ce qu'**en mode passant, l'au moins une soupape de séparation commandable (63, 63', 63", 63'", 63^{IV}, 163) et/ou l'au moins une soupape de purge (73, 73', 73", 73"', 73^{IV}, 173) peut être amenée à basculer au moyen du signal de commande (190) entre un premier et un second état de commande (i, ii) avec une fréquence d'horloge d'un changement d'état de commande (U).

7. Système d'alimentation en air comprimé selon la revendication 6, **caractérisé en ce qu'**une fréquence d'horloge d'un changement d'état de commande (U) se situe entre 4 et 20 Hz.

8. Système d'alimentation en air comprimé selon l'une des revendications 1 à 7, **caractérisé en ce que** le signal de commande (190) est un signal de commande PWM, en particulier sous la forme d'un signal de courant et/ou de tension.

9. Système d'alimentation en air comprimé selon l'une des revendications 1 à 8, **caractérisé en ce que** l'au moins une soupape de séparation commandable (63, 63', 63", 63'", 63^{IV}, 163) peut être amenée à basculer entre un premier et un second état de commande (i, ii) en mode de fonctionnement continu au moyen du signal de commande (190) de manière à ce qu'une dimension nominale effective (N_{eff}) du montage en série du moyen d'étranglement (62) et de la soupape de séparation commandable (63, 63', 63", 63'", 63^{IV}, 163) se situe en dessous d'une dimension nominale réelle du moyen d'étranglement (62).

10. Système d'alimentation en air comprimé selon l'une des revendications 1 à 9, **caractérisé en ce que** l'au moins une soupape de purge (73, 73', 73", 73"', 73^{IV}, 173) fait partie d'un système d'électrovanne (80, 80', 80", 80'", 80^{IV}, 180) destinée à la commutation directe d'un volume d'air comprimé, en tant que soupape directement raccordée.

11. Système d'alimentation en air comprimé selon l'une des revendications 1 à 9, **caractérisé en ce que** l'au moins une soupape de purge (73, 73', 73", 73"', 73^{IV}, 173) est réalisée sous la forme d'une soupape relais à commutation indirecte, faisant partie d'un dispositif à électrovanne (MVA, 80, 80', 80", 80"', 80^{IV}, 180) destinée à la commutation indirecte d'un volume d'air comprimé, dans lequel le système d'électrovanne (80, 80', 80", 80'", 80^{IV}, 180) comporte une soupape de commande (175) exposée à une pression de la conduite pneumatique principale (60), en particulier la pression totale, pour commander la soupape relais.

12. Système pneumatique (101, 201, 202, 203, 204, 300, 401), comportant le système d'alimentation en air comprimé (11, 21, 22, 23, 24, 30, 41) selon l'une des revendications précédentes et un système pneumatique (90), en particulier un système de suspension pneumatique d'un véhicule.

13. Procédé pour faire fonctionner un système pneumatique (90), en particulier un système de suspension pneumatique d'un véhicule, comportant un système d'alimentation en air comprimé (11, 21, 22, 23, 24, 30, 41) selon l'une des revendications 1 à 11, dans lequel l'au moins une soupape de séparation commandable (63, 63', 63", 63'", 63^{IV}, 163) est amenée à basculer dans un état fermé en mode de séparation et forme un montage en série avec le moyen d'étranglement (62) dans la conduite pneumatique principale (60), de telle sorte que cette dernière soit complètement fermée de manière bidirectionnelle en mode de séparation, et
l'au moins une soupape de séparation commandable (63, 63', 63", 63'", 63^{IV}, 163) est munie d'une première bobine (81) et l'au moins une soupape de purge commandable (73, 73', 73", 73"', 73^{IV}, 173) est munie d'une deuxième bobine (82), la première bobine et la deuxième bobine étant munies d'un corps de bobine (III) commun aux deux bobines (81', 81") sont commandées par un signal de commande (190) commun à l'une et à l'autre.

14. Procéde selon la revendication 13, **caractérisé en ce que** l'au moins une soupape de séparation commandable (63, 63', 63", 63'", 63^{IV}, 163) et/ou l'au moins une soupape de purge (73, 73', 73", 73"', 73^{IV}, 173) sont amenées à basculer entre un premier et un second état de commande (i, ii) à une fréquence d'horloge d'un changement d'état de commande (U).

15. Procédé selon la revendication 14, **caractérisé en ce que** l'au moins une soupape de séparation (63, 63', 63", 63'", 63^{IV}, 163) et/ou l'au moins une soupape de purge (73, 73', 73", 73"', 73^{IV}, 173) sont amenées à basculer entre un premier et un second état de commande (i, ii) au moyen d'un signal de commande, de préférence au moyen d'un signal de commande PWM, en particulier sous la forme d'un signal de courant et/ou de tension, avec une fréquence d'horloge d'un changement d'état de commande (U) compris entre 4Hz et 20 Hz.

16. Procédé selon l'une des revendications 13 à 15, **caractérisé en ce que** la soupape de séparation commandable (63, 63', 63", 63'", 63^{IV}, 163) est fermée à débit nul en mode de séparation.

17. Procédé selon la revendication 16, **caractérisé en ce que** la soupape de séparation (63, 63', 63", 63'", 63^{IV}, 163) et la soupape de purge (73, 73', 73", 73"', 73^{IV}, 173) sont fermées à débit nul en mode de séparation et **en ce que** la soupape de purge (73, 73', 73", 73"', 73^{IV}, 173) ne bascule en mode passant que lorsque la soupape de séparation (63, 63', 63", 63'", 63^{IV}, 163) est amenée à basculer à l'état ouvert.
